# EUROPEAN PATENT APPLICATION

(11) **EP 4 848 702 A1**
(43) Date of publication of application: **02.12.2026**
(21) Application number: 25795005.5
(22) Date of filing: 17.04.2025
(51) Int. Cl.: H04M 1/02

(54) **ELECTRONIC DEVICE COMPRISING CONNECTION MEMBER**

(30) Priority: 22.04.2024 KR 20240053604; 17.05.2024 KR 20240064438
(71) Applicant: Samsung Electronics Co., Ltd., Suwon-si, Gyeonggi-do 16677 (KR)
(72) Inventor: LEE, Ohhee, Suwon-si, Gyeonggi-do 16677 (KR); LEE, Howon, Suwon-si, Gyeonggi-do 16677 (KR); LEE, Chulhwan, Suwon-si, Gyeonggi-do 16677 (KR); CHOI, Jongchul, Suwon-si, Gyeonggi-do 16677 (KR)
(74) Representative: Nederlandsch Octrooibureau
(86) International application number: PCT/KR2025/005251
(87) International publication number: WO 2025/225967

(57) **Abstract**

Provided is an electronic device including a flexible display disposed in a housing and having a region visible to an outside varied according to sliding movement of a portion of the housing, a belt configured to interwork with movement of the flexible display, and a connecting member connecting the belt and an outermost layer of the flexible display, wherein the outermost layer of the flexible display is formed to surround at least a portion of the connecting member.

## Description

### [Technical Field]

An embodiment of the disclosure relates to an electronic device including a connecting member.

### [Background Art]

A portable electronic device, such as a smartphone, may provide various functions as well as a call function based on various types of applications, and in a process of providing various functions, the portable electronic device may output a screen corresponding to the functions. When the user uses the various functions, the user may want to use a wider screen. However, when the display device becomes larger for display a screen in a general portable electronic device, an overall size thereof increases, so that portability may deteriorate. Accordingly, an electronic device that may increase a size of a screen while maintaining portability has been developed.

### [Disclosure]

### [Technical Problem]

### [Technical Solution]

According to at least one embodiment of the disclosure, an electronic device (or a portable electronic device, a portable communication device, or a portable electronic device having a communication function) may include: a housing 210 and 220 defining at least one surface of the electronic device; a flexible display 230, of which a region visible to an outside is varied in response to sliding movement of a portion of the housing 210 and 220, and including a display panel 610 and a protective film 820 disposed on an outside of the display panel 610; a connecting member 710 disposed at one end of the display panel 610, and disposed such that at least a portion thereof is fixed to the protective film 820; and a belt 520 including one end portion 521 fixed to the connecting member 710 and an opposite end portion 522 fixed to an interior of the housing, wherein the protective film 820 extends beyond the display panel 610 to surround at least a portion of the connecting member 710.

According to at least one embodiment of the disclosure, an electronic device may include: a first housing 210; a second housing 220 disposed to be movable with respect to the first housing 210; a flexible display 230, of which a region visible to an outside is varied in response to movement of the second housing 220, and including a display panel 610 and a protective film 820 disposed on an outside of the display panel 610; a connecting member disposed at one end of the display panel 610, and disposed such that at least a portion thereof is fixed to the protective film 820; and a belt including one end portion fixed to the connecting member 710 and an opposite end portion fixed to an interior of the housing, wherein the protective film 820 extends beyond the display panel 610 and may be formed such that at least a portion thereof is bent in a region corresponding to the connecting member 710.

According to at least one embodiment of the disclosure, an electronic device may include: a housing 210 and 220 defining at least one surface of the electronic device; a flexible display 230, of which a region visible to an outside is varied in response to sliding movement of a portion of the housing 210 and 220, and including a display panel 610 and a protective film 820 disposed on an outside of the display panel 610; a connecting member 710 disposed at one end of the display panel 610, and disposed such that at least a portion thereof is fixed to the protective film 820; and a belt 520 including one end portion 521 fixed to the connecting member 710 and an opposite end portion 522 fixed to an interior of the housing, wherein the protective film 820 may extend beyond the display panel 610 toward the connecting member 710.

### [ Advantageous Effects]

### [ Description of Drawings]

FIG. 1 is a block diagram of an exemplary electronic device that may perform operations described in the disclosure.
FIG. 2A is a top plan view of an exemplary electronic device in a first state, FIG. 2B is a bottom view of an exemplary electronic device in the first state, FIG. 2C is a top plan view of an exemplary electronic device in a second state, and FIG. 2D is a bottom view of an exemplary electronic device in the second state.
FIGS. 3A and 3B are exploded perspective views of an exemplary electronic device.
FIG. 4A is a cross-sectional view of an exemplary electronic device in a first state. FIG. 4B is a cross-sectional view of an exemplary electronic device in a second state.
FIG. 5A is a rear view of an electronic device in a first state according to an embodiment, viewed from one direction, the electronic device including a belt assembly, and FIG. 5B is a cross-sectional view illustrating the electronic device according to an embodiment, taken along line A-A' in FIG. 5A.
FIG. 6A is a rear view of an electronic device in a second state according to an embodiment, viewed from one direction, the electronic device including a belt assembly, and FIG. 6B is a cross-sectional view illustrating the electronic device according to an embodiment, taken along line B-B' in FIG. 6A.
FIG. 7 is a perspective view illustrating a connecting member included in an electronic device according to an embodiment.
FIG. 8 is a perspective view illustrating a protective film included in an electronic device according to an embodiment.
FIG. 9A is a view illustrating an electronic device including a protective film coupled to a connecting member according to an embodiment, and FIG. 9B is a view illustrating the electronic device taken along line C-C' in FIG. 9A.
FIG. 10A is a perspective view for describing a fastening relationship between a support member and a connecting member according to an embodiment, FIG. 10B is a cross-sectional view taken along line D1-D1' in FIG. 10A, FIG. 10C is a cross-sectional view taken along line D2-D2' in FIG. 10A, and FIG. 10D is a cross-sectional view taken along line D3-D3' in FIG. 10A.
FIG. 11 is a perspective view illustrating a connection relationship between a belt assembly and a connecting member of an electronic device according to an embodiment.
FIG. 12 is a cross-sectional view illustrating the electronic device taken along line E-E' in FIG. 11.
FIG. 13 is a view illustrating a belt assembly of an electronic device according to an embodiment in detail.
FIG. 14 is a view for describing behavior of an electronic device according to an embodiment in response to an external impact.
FIG. 15 is a view illustrating a protective film and a connecting member of an electronic device according to an embodiment.
FIG. 16 is a view taken along line F-F' in FIG. 15.
FIG. 17 is a view illustrating a process of coupling a protective film and a connecting member of an electronic device according to an embodiment.
FIG. 18 is a cross-sectional view taken along line G-G' in FIG. 17.
FIG. 19 illustrates views illustrating a state before coupling between a flexible display and a connecting member of an electronic device according to an embodiment.
FIG. 20 illustrates views illustrating a coupled state of a flexible display and a connecting member according to an embodiment.
FIG. 21 illustrates views illustrating a rigid member fixed to a protective film of an electronic device according to an embodiment.
FIG. 22 illustrates views illustrating an electronic device including a rigid member according to an embodiment.
FIGS. 23A and 23B are views illustrating an electronic device according to an embodiment, the electronic device including an elastic member.
FIGS. 24A and 24B illustrate views illustrating an electronic device including an elastic member according to an embodiment.
FIGS. 25A to 25G illustrate views illustrating a process of assembling an electronic device according to an embodiment.

### [ Mode for Invention]

Hereinafter, various embodiments of the disclosure may be described with reference to accompanying drawings.

An embodiment of the disclosure described below provides an electronic device including a flexible display, a belt for interworking with movement of the flexible display, and a connecting member that connects the belt and an outermost layer of the flexible display.

The objects according to various embodiments of the disclosure will be described as necessary in a process of describing the embodiments.

In an electronic device according to an embodiment, a connecting member may be connected to an outermost layer (e.g., a protective film) of a flexible display, and a belt may pull the outermost layer through the connecting member.

In an electronic device according to an embodiment, a restraining force may be applied to a vulnerable layer (e.g., a flexible display), in which delamination of the flexible display may occur, such that a restraining force between layers in the flexible display may be increased.

In an electronic device according to an embodiment, a force that restrains the display panel in a direction opposite to a direction in which the display panel tends to separate may be applied, so that occurrence of defects in a flexible display, which may occur due to an external impact (e.g., a drop impact), may be reduced or prevented.

In an electronic device according to an embodiment, a smooth screen may be formed while enabling a smooth and seamless sliding operation, and thus a screen may be expanded in a sliding manner.

In addition, various purposes and effects provided by the electronic device according to various embodiments may be mentioned according to embodiments of the detailed description.

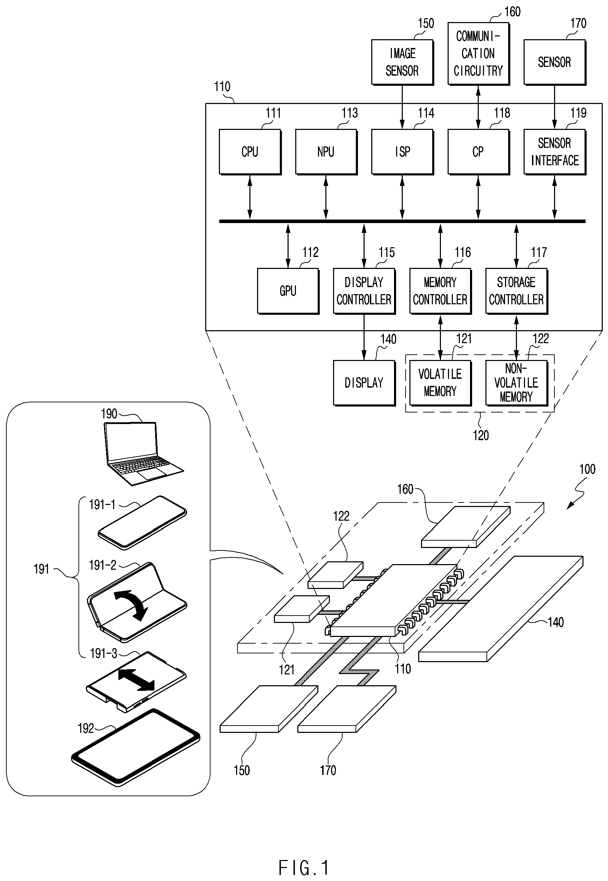

FIG. 1 illustrates a block diagram of an exemplary electronic device 100 capable of performing the operations described herein.

Referring to FIG. 1, the electronic device 100 may be one of various types of electronic devices, such as a notebook computer 190, smartphones 191 having various form factors (e.g., a bar-type smartphone 191-1, a foldable smartphone 191-2, or a slidable (or rollable) smartphone 191-3), a tablet PC 192, a cellular telephone (not shown), and any other similar computing devices (not shown). The components illustrated in FIG. 1, the relationships thereof, and the functions thereof are merely for illustration, and are not intended to limit the implementations described or claimed in the disclosure thereto. The electronic device 100 may be referred to as a mobile device, a user equipment, a multifunctional device, a portable device, or a server.

The electronic device 100 may comprise various components including at least one processor 110 (hereinafter, the processor 110), at least one memory 120 (hereinafter, the memory 120), at least one display 140 (hereinafter, the display 140), at least one image sensor 150 (hereinafter, the image sensor 150), at least one communication circuitry 160 (hereinafter, the communication circuitry 160), and/or at least one sensor 170 (hereinafter, the sensor 170). The aforementioned components are merely of an example. For example, the electronic device 100 may comprise other components (e.g., a power management integrated circuitry (PMIC), an audio processing circuitry, an antenna, a rechargeable battery, or an input/output interface). For example, some components may be omitted from the electronic device (100). For example, some components may be integrated into one component.

The processor 110 may be implemented as one or more integrated circuit (or circuitry) (IC) chips and may perform various data processing. The processor 110 may include at least one electrical circuitry and may process instructions (or program, data, and so on) stored in the memory 120 individually or collectively in a distributed manner. The processor 110 may include a processor assembly that includes one or more processing circuitries. The processor may include any processing circuitry that may be operative for controlling operations and performance of one or more components (e.g., the memory 120, a display 140, the image sensor 150, the communication circuitry 160, and/or the sensor 170) of the electronic device. For example, the processor 110 (e.g., an application processor (AP)) may be implemented as a system on chip (SoC) (e.g., one chip or chipset). For example, the processor 110 may be implemented as a plurality of cores (or at least one core circuitry), a plurality of chips, or a plurality of chipsets. For example, the processor 110 may comprise one or more processing circuitry. For example, the processor 110 may comprise one or more processing circuitry which are individually and/or collectively configured to perform various functions of the present disclosure. As a non-limiting example, at least a portion of the processor 110 may be included in a first chip of the electronic device 100 and at least another portion of the processor 110 may be included in a second chip of the electronic device 100 different from the first chip of the electronic device 100.

For example, the processor 110 may comprise a central processing unit (CPU) 111, a graphics processing unit (GPU) 112, a neural processing unit (NPU) 113, an image signal processor (ISP) 114, a display controller 115, a memory controller 116, a storage controller 117, a communication processor (CP) 118, and/or a sensor interface 119. These components of the processor 110 are merely of an example. For example, the processor 110 may further comprise other components. For example, some components of the processor 110 may be omitted from the processor 110. For example, some components of the processor 110 may be included as separate components of the electronic device 100 outside the processor 110. For example, some components of the processor 110 (e.g., the memory controller 116) may be included in other components of the electronic device 100 (e.g., at least a portion of the memory 120, an interface (e.g., usable for connecting to at least one component of the electronic device 100), the display 140, and/or the image sensor 150).

The processor 110 may cause other components of the electronic device 100 to perform various operations by executing instructions stored in the memory 120. The CPU 111 (or a central processing circuitry) may be configured to control the components of the processor 110 based on execution of instructions stored in the memory 120 (e.g., the volatile memory 121 and/or the non-volatile memory 122). The GPU 112 (or a graphic processing circuitry) may be configured to execute parallel computations (e.g., rendering). The NPU 113 (or a neural processing circuitry, or an artificial intelligence (AI) chip) may be configured to execute operations (e.g., convolution computations) for an artificial intelligence model. The ISP 114 (or an image signal processing circuitry) may be configured to process a raw image obtained from the image sensor 150 in a format suitable for a component in the electronic device 100 or a component of the processor 110. The display controller 115 (or a display control circuitry, or a display processing unit (DPU)) may be configured to process an image obtained from the CPU 111, the GPU 112, the ISP 114, or the memory 120 (e.g., the volatile memory 121) in a format suitable for the display 140. The memory controller 116 (or a memory control circuitry) may be configured to control reading data from the volatile memory 121 and writing data to the volatile memory 121. The storage controller 117 (or a storage control circuitry) may be configured to control reading data from the non-volatile memory 122 and writing data to the non-volatile memory 122. The CP 118 (or a communication processing circuitry) may be configured to process data obtained from a component of the processor 110 in a format suitable for transmission to another electronic device via the communication circuitry 160, or to process data obtained from another electronic device via the communication circuitry 160 in a format suitable for processing of the component of the processor 110. For example, the communication circuitry 160 may comprise one or more communication circuitry. The sensor interface 119 (or a sensing data processing circuitry, a sensor hub) may be configured to process data on a state of the electronic device 100 and/or a state around the electronic device 100, obtained through the sensor 170, in a format suitable for a component of the processor 110.

The memory 120 may comprise one or more storage mediums (or one or more storage devices). For example, the memory 120 may include a memory assembly that includes one or more storage mediums. For example, the one or more storage mediums may comprise a permanent memory (e.g., the non-volatile memory 122) such as a hard drive, a flash memory, a read-only memory (ROM), a semi-permanent memory (e.g., the volatile memory 121) such as a random access memory (RAM), a storage (or a storage assembly) of any other suitable type, or any combination thereof. The memory 120 may comprise a cache memory which is a memory of one or more different types used to store data for performing a function or feature of the electronic device 100 at least temporarily. As a non-limiting example, the cache memory may be included in the processor 110. The memory 120 may be fixedly embedded within the electronic device 100, or may be incorporated onto one or more suitable types of components that may be repeatedly inserted into the electronic device 100, and removed from the electronic device 100 (e.g., a subscriber identity module (SIM) card, and/or a secure digital (SD) card).

For example, the memory 120 may store one or more software applications such as an operating system (or a system) software application, a firmware software application, a driver software application, a plug-in (e.g., add-in, add-on, and/or applet) software application, and/or any other suitable software application. For example, the one or more software applications may include instructions executable by the processor 110. For example, the memory 120 may store instructions callable by an application programming interface (API). For example, the memory 120 may store instructions in a library.

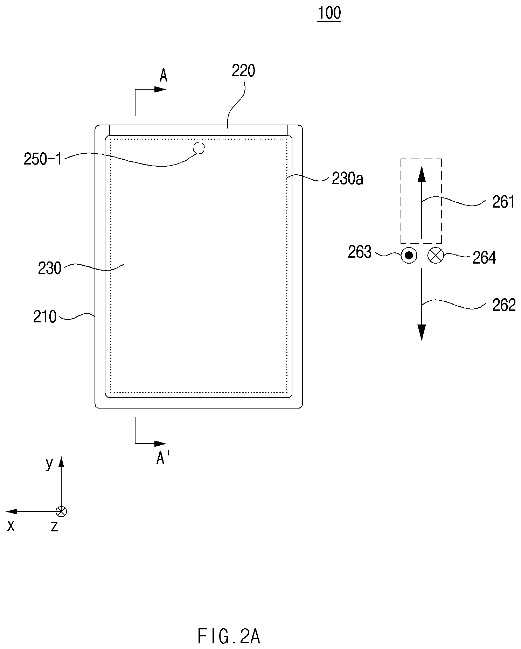

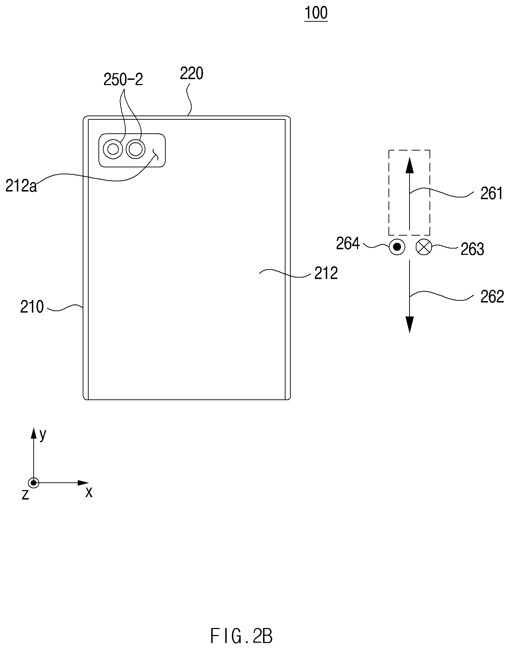

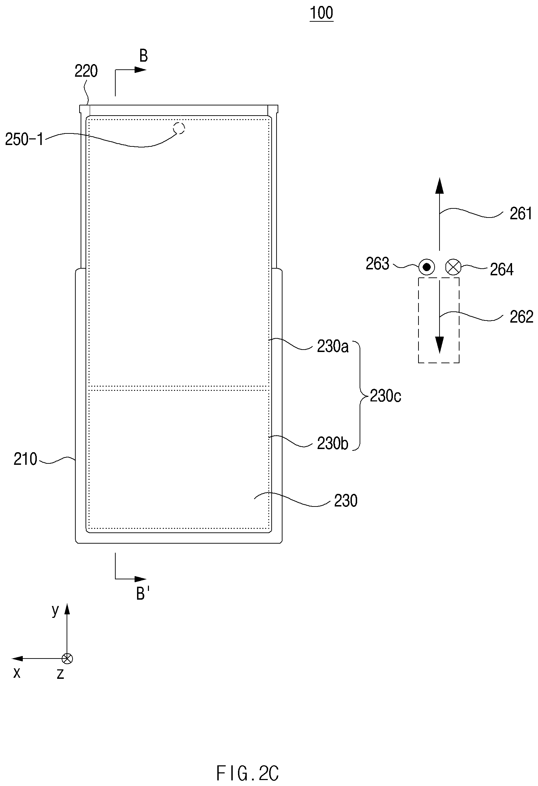

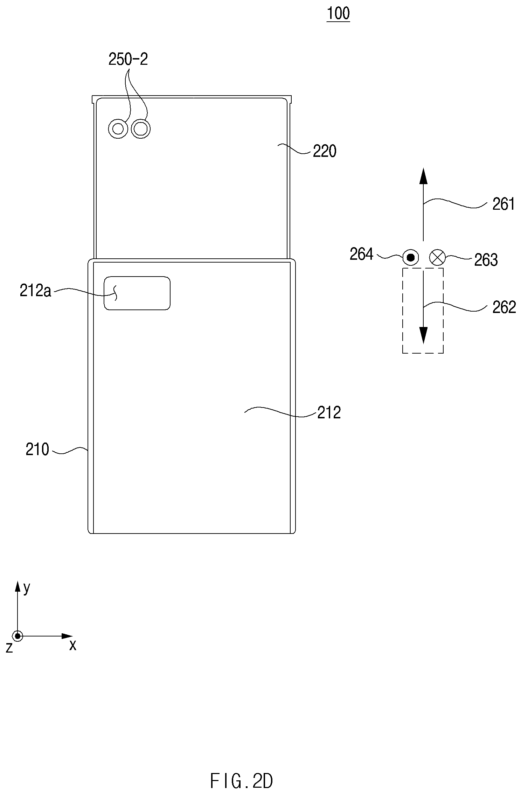

For example, the display 140 may be flexible. For example, the display 140 may provide at least a portion of an exterior surface of the electronic device 100 and may include a display area that is visually exposed out of the housing of the electronic device 100. For example, the display 140 may have flexibility, so at least a portion of the display 140 may be rollable into the housing or slidable into the housing. For example, a size of the display area may change, depending on a size of the at least a portion of the display 140 that is rolled into the housing or slid into the housing. For example, the electronic device 100 including the display 140 may be in a plurality of states including a first state providing the display area having a first size and a second state providing the display area having a second size different from the first size. For example, the first state may be exemplified through the description of FIGS. 2A and 2B, and the second state may be exemplified through the description of FIGS. 2C and 2D.

FIG. 2A illustrates a top plan view of an exemplary electronic device 100 in a first state.

Referring to FIG. 2A, the electronic device 100 may include a first housing 210, a second housing 220 movable relative to the first housing 210 in a first direction 261 parallel to the y-axis or a second direction 262 parallel to the y-axis and opposite to the first direction 261, and a flexible display 230 (e.g., the display 140 of FIG. 1).

For example, in the first state, the second housing 220 may be movable relative to the first housing 210 in the first direction 261 among the first direction 261 and the second direction 262. For example, in the first state, the second housing 220 may not be moveable relative to the first housing 210 in the second direction 262. The disclosure is described that the second housing 220 is moved relative to the first housing 210, the disclosure is not limited thereto. For example, the first housing 210 may be movable relative to the second housing 220. For example, the size of the display area of the flexible display 230 that is visually exposed out of the housing of the electronic device 100 may change according to a change in the relative positional relationship between the first housing 210 and the second housing 220.

For example, in the first state, the flexible display 230 may provide the display area having a smallest size. For example, in the first state, the display area may correspond to a first area 230a. For example, although not shown in FIG. 2A, in the first state, another area of the flexible display 230 (e.g., a second area 230b in FIG. 2C) different from the first area 230a of the display area may be disposed in the first housing 210. For example, in the first state, the second area 230b may be covered by the first housing 210. For example, in the first state, the second area 230b may be moved into the first housing 210. For example, at least a portion of the second area 230b may be rolled into the first housing 210. For example, in the first state, the first area 230a may include a planar portion. For example, in the first state, a portion of the second area 230b may include a curved portion. However, the disclosure is not limited thereto. For example, in the first state, the first area 230a may include a curved portion extending from the planar portion.

For example, the first state may be referred to as a slide-in state in a sense that at least a portion of the second housing 220 is positioned within the first housing 210, as the second housing 220 slides toward the first housing 210. For example, the first state may be also referred to as a reduced state in terms of providing the display area having the smallest size. However, the disclosure is not limited thereto.

For example, the second housing 220 may include a front camera 250-1 that acquires visual information through a portion of the first area 230a and faces a third direction 263 parallel to the z-axis. For example, although not shown in FIG. 2A, the second housing 220 may include one or more rear cameras (e.g., rear cameras 250-2 of FIG. 2B) that are arranged to be visually exposed through a portion of second housing 220, facing a fourth direction 264 that is parallel to the z-axis and opposite to the third direction 263. For example, the one or more rear cameras 250-2 may be exemplified through the description of FIG. 2B below.

FIG. 2B illustrates a bottom view of an exemplary electronic device in a first state.

Referring to FIG. 2B, in the first state, the one or more rear cameras 250-2 disposed in the second housing 220 may be positioned within a structure disposed in the first housing 210 for the one or more rear cameras 250-2. For example, because the one or more rear cameras 250-2 are positioned within the structure in the first state, the one or more rear cameras 250-2 may be visually exposed through the structure in the first state to the outside. The one or more rear cameras 250-2 may obtain visual information through the structure. For example, the structure may be implemented in various ways. For example, the structure may be an opening or a notch. For example, the structure may be an opening 212a in a first plate 212 of the first housing 210 configured to surround at least a portion of the second housing 220. However, the disclosure is not limited thereto.

Referring back to FIG. 1, the first state may be changed to the second state.

For example, the first state (or the second state) may be changed to the second state (or the first state) through one or more intermediate states between the first state and the second state.

For example, the first state (or the second state) may be changed to the second state (or the first state) based on a predefined user input. For example, the first state (or the second state) may be changed to the second state (or the first state) in response to a user input onto a physical button visually exposed through a portion of the first housing 210 or a portion of second housing 220. The types of the user inputs have no limitation. For example, the user input may include a user input via a touch screen in a display area of the flexible display 230, or a user input via a microphone of the electronic device 100. For example, the state of the electronic device 100 may be changed to the second state (or the first state) by an external force applied to the first housing 210 and/or the second housing 220.

The second state may be exemplified through description of FIGS. 2C and 2D below.

FIG. 2C illustrates a top view of an exemplary electronic device 100 in the second state.

Referring to FIG. 2C, in the second state, the second housing 220 may be movable relative to the first housing 210 in the second direction 262 among the first direction 261 and the second direction 262. For example, in the second state, the second housing 220 may not be moveable in the first direction 261 relative to the first housing 210.

For example, in the second state, the flexible display 230 may provide a display area having the largest size. For example, in the second state, the display area may correspond to a display area 230c including the first area 230a and the second area 230b. For example, the second area 230b, which was included within the first housing 210 in the first state, may be visually exposed to the outside in the second state. For example, in the second state, the first area 230a and the second area 230b may include a planar portion. However, the present disclosure is not limited thereto. For example, the first area 230a and/or the second area 230b may include a curved portion positioned in an edge part, extending from the planar portion.

For example, the second state may be referred to as a slide-out state in a sense that at least a portion of the second housing 220 is positioned outside of the first housing 210, as the second housing 220 slides away from the first housing 210. For example, the second state may be referred to as an extended state in a sense that it provides the display area having the largest size. However, the disclosure is not limited thereto.

For example, the front camera 250-1 facing the third direction 263 may move along with the first area 230a according to movement of the second housing 220 in the first direction 261, when the state of the electronic device 100 is changed from the first state to the second state. For example, although not shown in FIG. 2C, the one or more rear cameras facing the fourth direction 264 (e.g., rear cameras 250-2 in FIG. 2D) may be moved along with the second housing 220 according to movement of the second housing 220 in the first direction 261, when the state of the electronic device 100 is changed from the first state to the second state. For example, the relative positional relationship between the one or more rear cameras 250-2 and the structure illustrated with the description of FIG. 2B may change depending upon the movement of the one or more rear cameras 250-2. For example, such a change in the relative positional relationship may be exemplified with reference to FIG. 2D.

FIG. 2D illustrates a bottom view of an exemplary electronic device 100 in the second state.

Referring to FIG. 2D, in the second state, the one or more rear cameras 250-2 may be disposed outside the structure. For example, in the second state, the one or more rear cameras 250-2 may be positioned out of the opening 212a in the first plate 212. For example, since the one or more rear cameras 250-2 are positioned outside the opening 212a in the second state, the one or more rear cameras 250-2 may be visually exposed to the outside in the second state. The one or more rear cameras 250-2 positioned outside the structure may obtain visual information. For example, since the one or more rear cameras 250-2 are positioned outside the structure in the second state, the relative positional relationship between the one or more rear cameras 250-2 and the structure (e.g., the opening 212a) in the second state may be different than the relative positional relationship between the one or more rear cameras 250-2 and the structure (e.g., opening 212a) in the first state (e.g., FIG. 2B).

Although not shown in FIGS. 2A, 2B, 2C, and 2D, the electronic device 100 may be in an intermediate state between the first state and the second state. For example, the size of the display area in the intermediate state may be larger than the size of the display area in the first state and less than the size of the display area in the second state. For example, the display area in the intermediate state may correspond to an area including a portion of the first area 230a and a portion of the second area 230b. For example, in the intermediate state, a portion of the second area 230b may be visually exposed to the outside, while another portion (or the remaining portion) of the second area 230b may be covered by the first housing 210 or slid into the first housing 210. However, the disclosure is not limited thereto.

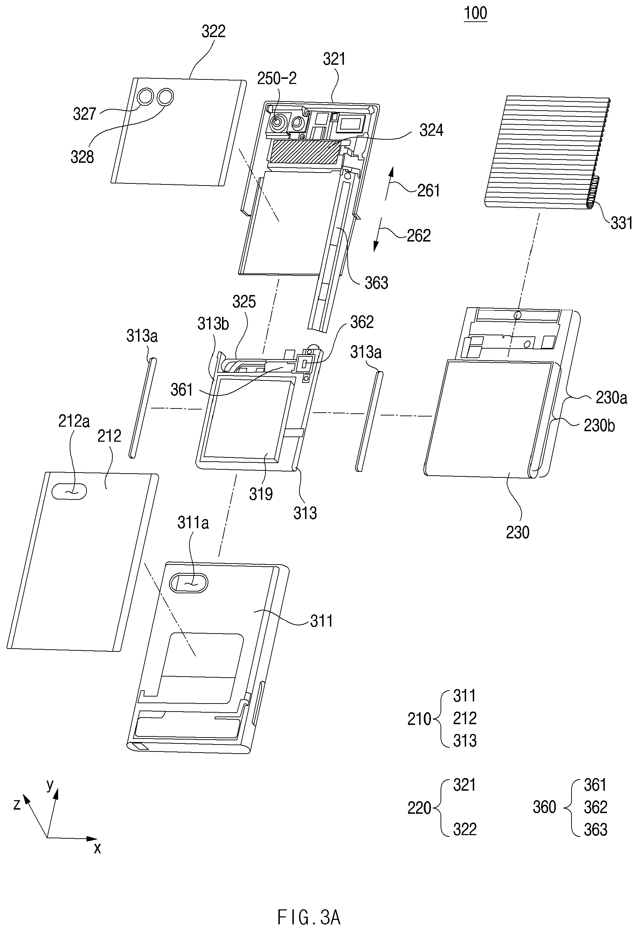

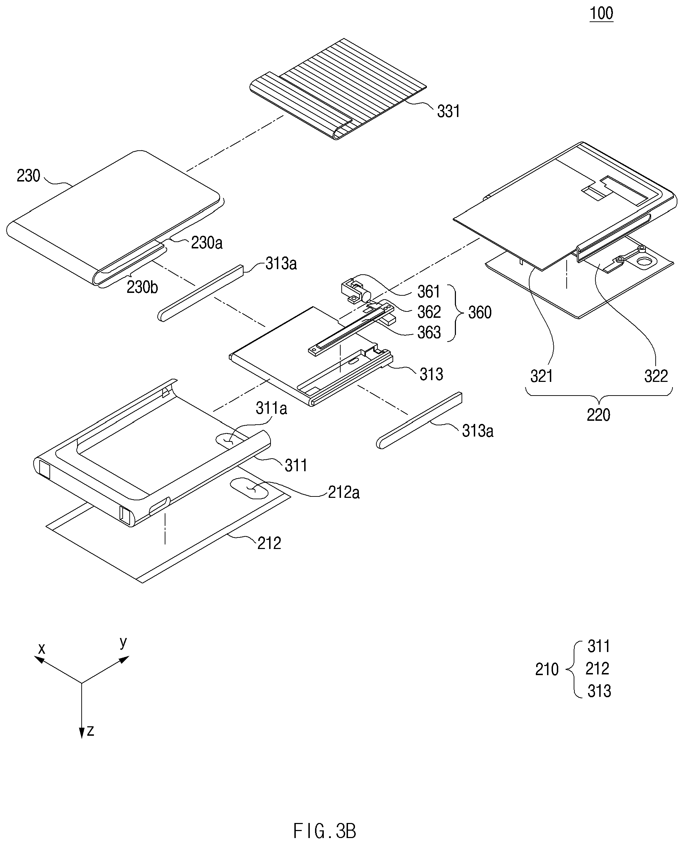

The electronic device 100 may include structures for moving the second housing (e.g., the second housing 220 of FIGS. 2A, 2B, 2C, and 2D) of the electronic device 100 relative to the first housing (e.g., the first housing 210 of FIGS. 2A, 2B, 2C, and 2D) of the electronic device 100. For example, those structures may be exemplified by the description of FIGS. 3A and 3B.

FIGS. 3A and 3B are exploded perspective views of an exemplary electronic device.

Referring to FIGS. 3A and 3B, the electronic device 100 may include a first housing 210, a second housing 220, a flexible display 230, and a sliding drive part 360.

For example, the first housing 210 may include a first cover 311, a first plate 212, and a frame 313.

For example, the first cover 311 may at least partially form a side portion of an exterior surface of the electronic device 100. For example, the first cover 311 may at least partially form a rear portion of the exterior surface. For example, the first cover 311 may include an opening 311a for the one or more rear cameras 250-2. For example, the first cover 311 may include a surface that supports the first plate 212. For example, the first cover 311 may be coupled with the first plate 212. For example, the first cover 311 may provide a space in which the frame 313 is seated. For example, the first cover 311 may be coupled with the frame 313.

For example, the first plate 212 may at least partially form a rear portion of the exterior surface. For example, the first plate 212 may include an opening 212a for the one or more rear cameras 250-2. For example, the first plate 212 may be disposed on a top surface of the first cover 311. For example, the opening 212a may be aligned with the opening 311a.

For example, the frame 313 may be at least partially surrounded by the first cover 311.

For example, the frame 313 may be at least partially surrounded by the flexible display 230. For example, the frame 313 may be at least partially surrounded by the flexible display 230, but the position of the frame 313 may be maintained independent of movement of the flexible display 230. For example, the frame 313 may be arranged with respect to at least some of the components of the flexible display 230. For example, the frame 313 may include rails 313a that provide (or guide) a path of movement for at least one component of the flexible display 230.

For example, the frame 313 may be coupled to at least one component of the electronic device 100. For example, the frame 313 may support a rechargeable battery 319. For example, the battery 319 may be supported through a recess or a hole in a surface 313b of the frame 313. For example, the frame 313 may fix one end of a flexible printed circuit board (FPCB) 325 onto the surface of the frame 313. One end of the FPCB 325 may be electrically connected to a motor 361. For example, although not explicitly illustrated in FIGS. 3A and 3B, the other end of the FPCB 325 may be connected to a PCB 324 via at least one connector. For example, the PCB 324 may be electrically connected, via FPCB 325, to another PCB (not shown in FIGS. 3A and 3B) that provides power to the motor 361.

For example, the frame 313 may be coupled to at least one structure of the electronic device 100 for a plurality of states including the first state and the second state. For example, the frame 313 may fasten the motor 361 of the sliding drive part 360.

For example, the second housing 220 may movably engage with the first housing 210. The second housing 220 may include a second cover 321 and a second plate 322.

For example, the second cover 321 may be at least partially surrounded by the flexible display 230. For example, the second cover 321 may be coupled to at least a portion of the first area 230a of the flexible display 230 that encloses the second cover 321, as opposed to the frame 313, such that the flexible display 230 is moved along with the second housing 220 moved relative to the first housing 210.

For example, the second cover 321 may be coupled to at least one component of the electronic device 100. For example, the second cover 321 may be coupled with the printed circuit board (PCB) 324 including components of the electronic device 100. For example, the PCB 324 may include a processor 110 (not shown in FIGS. 3A and 3B). For example, the second cover 321 may include one or more rear cameras 250-2.

For example, the second cover 321 may be coupled with at least one structure of the electronic device 100 for a plurality of states including the first state and the second state. For example, the second cover 321 may fix the rack gear 363 (or a linear gear) of the sliding drive part 360.

For example, the motor 361 of the sliding drive part 360 may be secured to the second cover 321, and the rack gear 363 of the sliding drive part 360 may be secured to the frame 313.

For example, the second cover 321 may be coupled with the second plate 322.

For example, the second plate 322 may be coupled to the second cover 321 to protect at least one component of the electronic device 100 coupled within the second cover 321 and/or at least one structure of the electronic device 100 coupled within the second cover 321. For example, the second plate 322 may include a structure for the at least one component. For example, the second plate 322 may include one or more openings 327, 328 for the one or more rear cameras 250-2. For example, the one or more apertures 327, 328 may be aligned with the one or more rear cameras 250-2 arranged on the second cover 321. For example, a size of each of the one or more openings 327, 328 may correspond to a size of each of the one or more rear cameras 250-2.

For example, the flexible display 230 may include a support member 331. For example, the support member 331 may include a plurality of bars. For example, the plurality of bars may be coupled to each other. The support member 331 may support the second area 230b of the flexible display 230.

For example, the sliding drive part 360 may include a motor 361, a pinion gear 362 (or a circular gear), and a rack gear 363.

For example, the motor 361 may operate based on the power from the battery 319. For example, the power may be provided to the motor 361 in response to the predefined user input.

For example, the pinion gear 362 may be coupled to the motor 361 through a shaft. For example, the pinion gear 362 may rotate based on the motion of the motor 361 transmitted via the shaft.

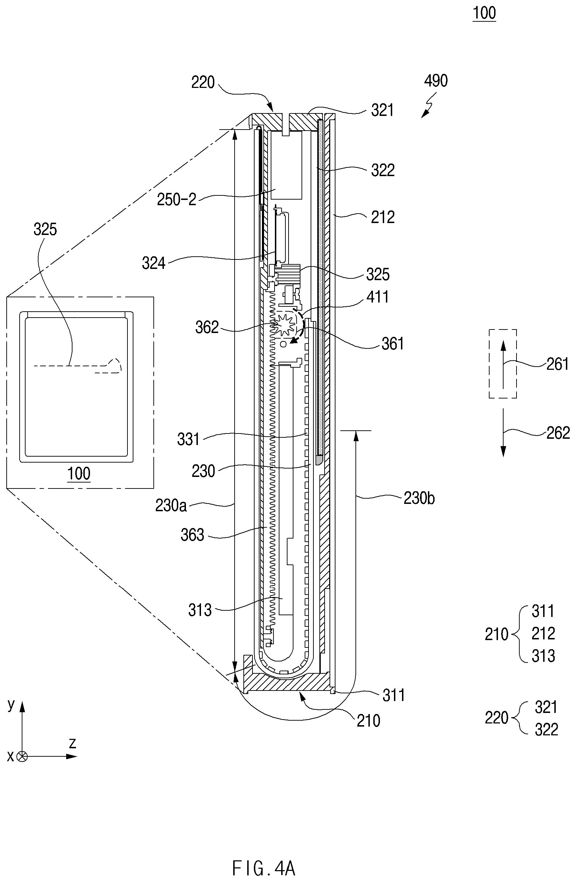

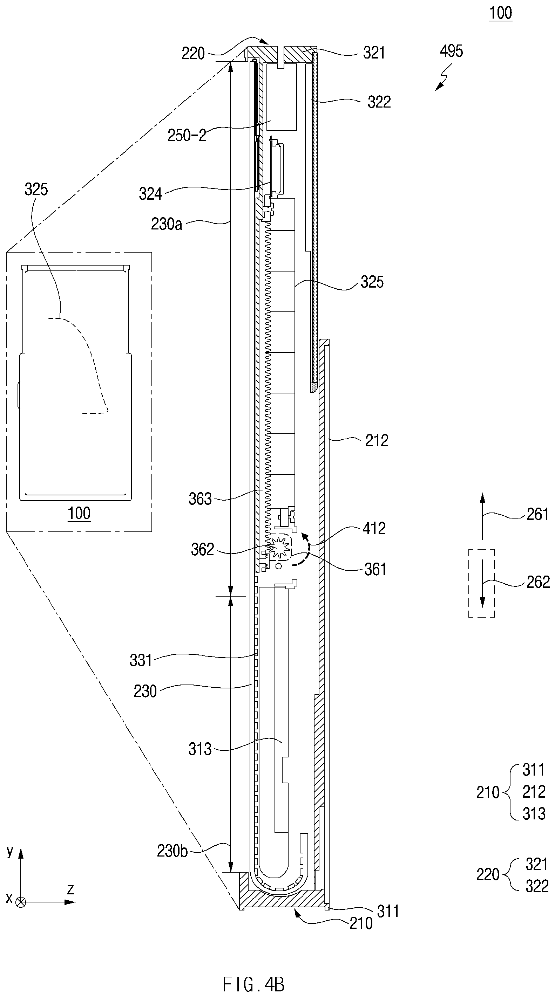

For example, the rack gear 363 may be arranged in relation to the pinion gear 362. For example, teeth of the rack gear 363 may engage with teeth of the pinion gear 362. For example, the rack gear 363 may be moved in the first direction 261 or the second direction 262, according to the rotation of the pinion gear 362. For example, the second housing 220 may be moved in the first direction 261 and the second direction 262, by the rack gear 363 which is moved according to the rotation of the pinion gear 362 caused by the motion of the motor 361. For example, the first state of the electronic device 100 may be changed to the state different from the first state (e.g., one or more intermediate states or the second state), through the movement of the second housing 220 in the first direction 261. For example, the second state of the electronic device 100 may be changed to the state different from the second state (e.g., one or more intermediate states or the first state), through the movement of the second housing 220 in the second direction 262. For example, such a change of the first state to the second state by the sliding drive part 360 and such a change of the second state to the first state by the sliding drive part 360 may be described with reference to FIGS. 4A and 4B.

FIG. 4A illustrates a cross-sectional view of an exemplary electronic device in the first state. FIG. 4B illustrates a cross-sectional view of an exemplary electronic device in the second state.

Referring to FIGS. 4A and 4B, the motor 361 may operate based at least in part on the predefined user input received in the first state 490. For example, the pinion gear 362 may rotate in the first rotational direction 411 based at least in part on the motion of the motor 361. For example, the rack gear 363 may be moved in the first direction 261 based at least in part on the rotation of the pinion gear 362 in the first rotation direction 411. For example, the second cover 321 in the second housing 220 fixes the rack gear 363, and therefore, the second housing 220 may be moved in the first direction 261, based at least in part on the movement of the rack gear 363 in the first direction 261. For example, since the second cover 321 in the second housing 220 is coupled to at least part of the first area 230a of the flexible display 230 and fixes the rack gear 363, the flexible display 230 may be moved in the first direction 261, based at least in part on the movement of the rack gear 363 in the first direction 261. For example, the flexible display 230 may be moved along the rails 313a of FIG. 3B. For example, as the support member 331 is moved along the rails 313a in the first direction 261, the flexible display 230 supported by the support member 331 may be moved in the first direction 261. For example, the shape of at least some of the plurality of bars of the support member 331 of the flexible display 230 may change when the first state 490 is changed to the second state 495.

For example, the second area 230b of the flexible display 230 may be moved according to the movement of the flexible display 230. For example, the second area 230b may be moved through a space between the first cover 311 and the frame 313, when the first state 490 is changed to the second state 495 in response to the predefined user input. For example, the second area 230b in the second state 495 may be visually exposed to the outside, as opposed to the second area 230b rolled into the space in the first state 490.

For example, the shape of the FPCB 325 may change when the first state 490 is changed to the second state 495, since the second cover 321 in the second housing 220 is coupled to the PCB 324 connected with the other end of the FPCB 325 and secures the rack gear 363.

The motor 361 may operate based at least in part on the predefined user input received in the second state 495. For example, the pinion gear 362 may be rotated in a second rotation direction 412, based at least in part on the motion of the motor 361. For example, the rack gear 363 may be moved in the second direction 262, based at least in part on the rotation of the pinion gear 362 in the second rotation direction 412. For example, because the second cover 321 in the second housing 220 fixes the rack gear 363, the second housing 220 may be moved in the second direction 262, based at least in part on the movement of the rack gear 363 in the second direction 262. For example, because the second cover 321 in the second housing 220 is coupled to at least a portion of the first area 230a of the flexible display 230 and fixes the rack gear 363, the flexible display 230 may be moved based at least in part on the movement of the rack gear 363 in the second direction 262. As the support member 331 is moved in the second direction 262 along the rails 313a, the flexible display 230 supported by the support member 331 may be moved in the second direction 262. For example, the flexible display 230 may be moved along the rails (e.g., rails 313a in FIG. 3b). For example, the shape of at least some of the plurality of bars of the support member 331 of the flexible display 230 may change when the second state 495 is changed to the first state 490. The support member 331 may be moved relative to the first housing 210. In the first state 490, the support member 331 housed inside the first housing 210 may be positioned between the first cover 311 and the frame 313. Along with the movement of the support member 331, the flexible display 230 may be moved relative to the first housing 210.

For example, the second area 230b of the flexible display 230 may be moved according to the movement of the flexible display 230. For example, the second area 230b may be moved through the space between the first cover 311 and the frame 313, when the second state 495 is changed to the first state 490 according to the predefined user input. For example, the second area 230b in the first state 490 may be rolled into the space, as opposed to the second area 230b visually exposed in the second state 495.

For example, since the second cover 321 in the second housing 220 is coupled to the PCB 324, which is connected to the other end of the FPCB 325, and fixes the rack gear 363, the shape of the FPCB 325 may change when the second state 495 is changed to the first state 490.

FIGS. 2A to 4B illustrate the electronic device 100 in a portrait mode in which the height of the display area changes and the width of the display area is maintained when the first state (or the second state) is changed to the second state (or the first state), but the disclosure is only for convenience of description. For example, the electronic device 100 may be implemented such that when the first state (or the second state) is changed to the second state (or the first state) in the portrait mode, the height of the display area is maintained and the width of the display area changes.

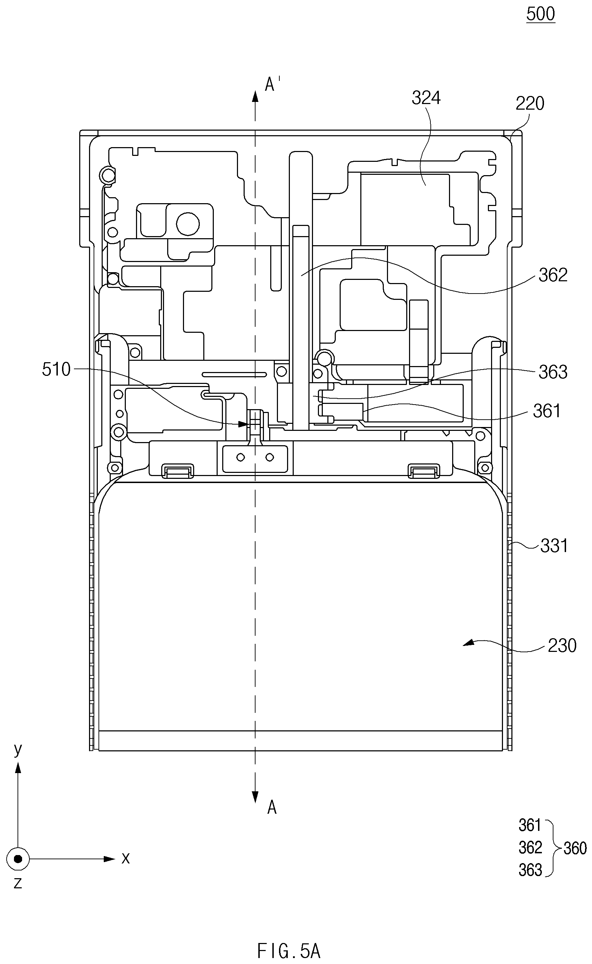

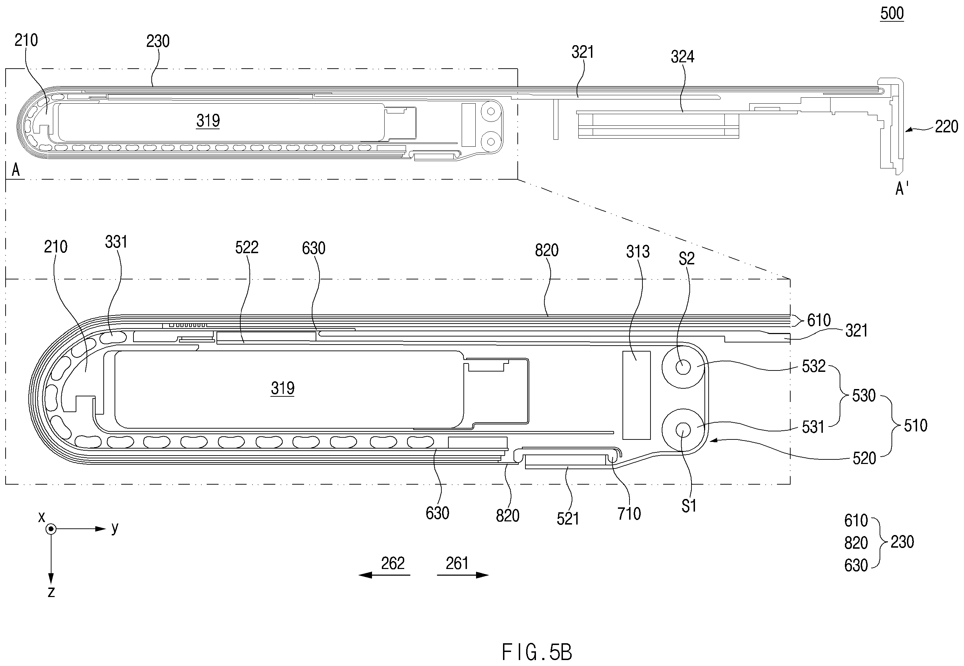

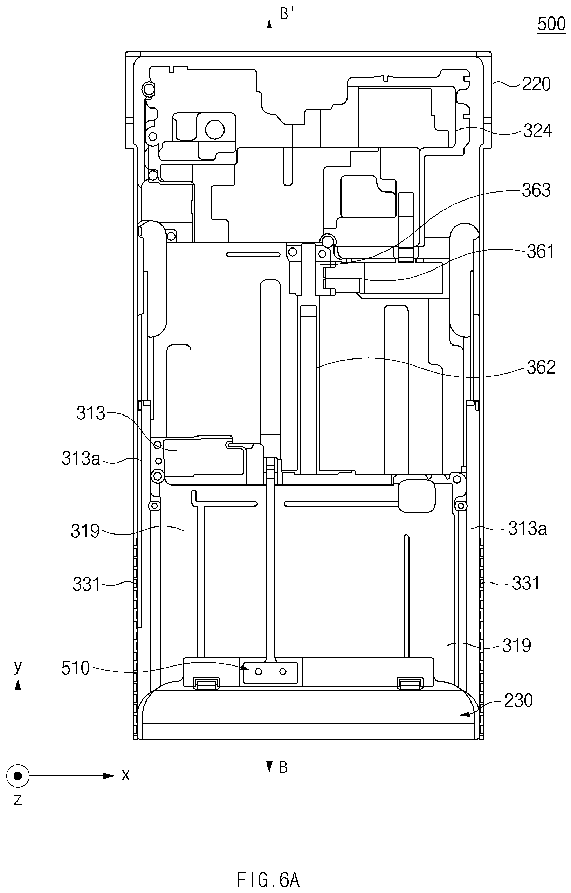

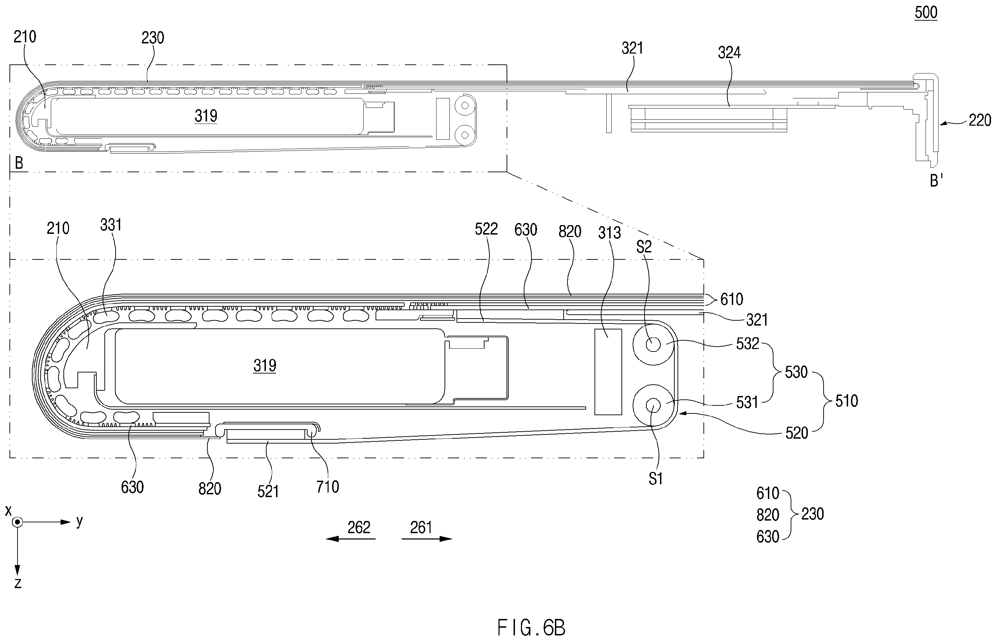

FIG. 5A is a rear view of an electronic device in a first state according to an embodiment, viewed from one direction, the electronic device including a belt assembly. FIG. 5B is a cross-sectional view illustrating the electronic device according to an embodiment, taken along line A-A' in FIG. 5A. FIG. 6A is a rear view of an electronic device in a second state according to an embodiment, viewed from one direction, the electronic device including a belt assembly. FIG. 6B is a cross-sectional view illustrating the electronic device according to an embodiment, taken along line B-B' in FIG. 6A. FIGS. 5A, 5B, 6A, and 6B may be views in which a portion (e.g., a first plate) of a first housing is omitted from an electronic device according to an embodiment.

The electronic device 500 of FIGS. 5A, 5B, 6A, and 6B may be at least partially similar to at least one of the electronic device 100 of FIG. 1, the electronic device 100 of FIGS. 2A to 2D, the electronic device 100 of FIGS. 3A and 3B, and the electronic device 100 of FIGS. 4A and 4B, or may include other embodiments of an electronic device. The electronic device 500 of FIGS. 5A, 5B, 6A, and 6B may use the same reference numerals as those used for components that are identical to those of any one of the preceding embodiments of FIGS. 1 to 4B, or may omit such reference numerals for components that may be readily understood from the preceding embodiments, and a detailed description thereof will also be omitted.

The electronic device 500 of FIGS. 5A, 5B, 6A, and 6B may include a first housing 210, a second housing 220, a sliding drive part 360, a flexible display 230, a printed circuit board 324, a battery 319, a belt assembly 510 (or a belt drive part, a wrapping connector driving gear, or a tensioning device), and a connecting member 710 (or a bracket, a link, or a bridge).

According to an embodiment, the printed circuit board 324, a pinion gear 362 of the sliding drive part 360, and a motor 361 may be disposed on a second cover 321 of the second housing 220. According to an embodiment, the battery 319 may be disposed on a frame 313 of the first housing 210. According to an embodiment, the battery 319, the flexible display 230, and the motor 361 of the sliding drive part 360 may be electrically connected to the printed circuit board 324 through an electrical connecting member, such as a flexible printed circuit board (FPCB) (e.g., the FPCB 325 of FIGS. 4A and 4B).

According to an embodiment, the flexible display 230 may have a size (or an area) of a visible region, which forms a front surface of the electronic device 500, varied in response to sliding movement of the second housing 220 with respect to the first housing 210. A size of a region of the electronic device 500, which is visually visible from an outside of the electronic device 500, may be increased or decreased based on sliding movement of the second housing 220 with respect to the first housing 210. A plurality of layers may overlap each other so that the flexible display 230 is formed of a multi-layered structure. The flexible display 230 may include at least some of the protective film 820, the display panel 610, and the support sheet (or lattice plate) 630.

The protective film 820 may be located on an outside of the display panel 610. As an example, the protective film 820 may be an outermost layer that is disposed on an outermost side of the flexible display 230 to be visible to an outside of the electronic device 500. The protective film 820 may be disposed on the display panel 610. The protective film 820 may be formed to extend beyond at least any one of the display panel 610 and a support sheet 630. One end of the protective film 820, which faces the connecting member 710, may be formed to extend toward the connecting member 710 beyond at least any one of the display panel 610 and the support sheet 630.

The display panel 610 may be connected to one surface (e.g., a rear surface) of the protective film 820 and may output a screen. The display panel 610 may be disposed between the support sheet 630 and the protective film 820.

The support sheet 630 may be located on an inside of the display panel 610. As an example, the support sheet 630 may be an innermost layer that is disposed on an innermost side of the flexible display 230. The support sheet 630 may be connected to one surface (e.g., a rear surface) of the display panel 610 and may support the display panel 610. At least a portion of the support sheet 630 may include a lattice structure including slits.

According to an embodiment, the belt assembly 510 may enable movement or force between driving elements related to sliding of the second housing 220 with respect to the first housing 210 to be smoothly transmitted, so that smooth and seamless sliding may be enabled. At least one belt assembly 510 may make sliding of the electronic device 500 smooth and seamless, so that stress applied to driving elements may be reduced to reduce or prevent damage thereto. At least one belt assembly 510 may allow the flexible display 230 to be substantially flatly disposed in the second state of the electronic device 500 while reducing a phenomenon in which a portion of the flexible display 230 is lifted due to elasticity of the flexible display 230.

According to an embodiment, one or a plurality of belt assemblies 510 may be provided. The belt assembly 510 may be disposed between the flexible display 230 and the second cover 321 of the second housing 220.

According to an embodiment, the belt assembly 510 may include a belt 520 and a pulley member (or a roller apparatus or a rolling part) 530 corresponding to the belt 520.

The belt 520 may be disposed between the housings 210 and 220 and the connecting member 710. The pulley member 530 may be located inside the second housing 220 in correspondence to the belt 520. The belt 520 may include a one end portion (or a first end) 521 located at one end of the belt 520 and an opposite end portion (or a second end) 522 located at an opposite end of the belt 520. As an example, the one end portion 521 of the belt 520 may be fixed to the connecting member 710, and the opposite end portion 522 of the belt 520 may be fixed inside the housings 210 and 220. As an example, the one end portion 521 of the belt 520 may be fixed to the connecting member 710, and the opposite end portion 522 of the belt 520 may be fixed to the second housing 220 and/or a support member 331. The one end portion 521 of the belt 520 may be connected to the connecting member 710 through various methods, such as bolt fastening, welding, an adhesive, and/or a hook joint. The opposite end portion 522 of the belt 520 may be connected to the second housing 220 and/or the support member 331 through various methods, such as bolt fastening, welding, an adhesive, and/or a hook joint.

The one end portion 521 and/or the opposite end portion 522 of the belt 520 may be formed to have a greater width than a remaining portion of the belt 520. The one end portion 521 and/or the opposite end portion 522 of the belt 520 may be formed to have a greater width than a remaining portion of the belt 520, so that a contact area with the connecting member 710, the second housing 220, and/or the support member 331 may be increased.

The pulley member 530 may be configured to roll a predetermined section of the belt 520 in response to slide-in or slide-out movement of the second housing 220 with respect to the first housing 210. The pulley member 530 may be operatively connected to the belt 520 and may guide movement of the belt 520 and a movement direction of the belt 520 during sliding of the second housing 220 with respect to the first housing 210. One or a plurality of pulley members 530 may be provided and may be fixed to the frame 313. The pulley member 530 may be disposed to be spaced apart from at least any one of the printed circuit board 324, the battery 319, and the sliding drive part 360 when a rear surface of the electronic device 500 is viewed from above (e.g., in the -z-axis direction). As an example, the pulley member 530 may be disposed to be spaced apart from the battery 319 in a first direction 261. As an example, the pulley member 530 may be disposed to be spaced apart from the printed circuit board 324 in a second direction.

The pulley member 530 may be disposed in the first housing 210 in correspondence to the belt 520. The pulley member 530 may include a first pulley member 531 and a second pulley member 532, which are operatively connected to the belt 520. The first pulley member 531 and the second pulley member 532 may be disposed to be spaced apart from each other. The first pulley member 531 and the second pulley member 532 may be disposed to be spaced apart from each other in the z-axis direction. The first pulley member 531 may be disposed closer to the connecting member 710 than the second pulley member 532, and the second pulley member 532 may be disposed farther from the connecting member 710 than the first pulley member 531.

The first pulley member 531 may be rotated about a first rotation axis S1 parallel to the x axis. The second pulley member 532 may be rotated about a second rotation axis S2 that is parallel to the first rotation axis S1. During sliding movement of the second housing 220 with respect to the first housing 210, the belt 520 may be moved while rotating the first pulley member 531 and the second pulley member 532.

According to an embodiment, in a first state or a second state of the electronic device 500, the one end portion 521 of the belt 520 may provide a first tensile force (e.g., a first belt tension) to one side of the flexible display 230. In the first state or the second state of the electronic device 500, the opposite end portion 522 of the belt 520 may provide a second tensile force (e.g., a second belt tension) to an opposite side of the flexible display 230. In the first state or the second state of the electronic device 500, the first tensile force and the second tensile force may be provided so that a portion of a second region 230b of the flexible display 230, which provides a screen, may be maintained in a form smoothly connected to a first region 230a of the flexible display 230 without being lifted. The first tensile force and the second tensile force may be substantially the same as each other, for example.

According to an embodiment, during slide-out of the second housing 220 with respect to the first housing 210, with respect to the pulley member 530, a tight-side tension (or a tensile-side tension) may act on the one end portion 521 of the belt 520, and a slack-side tension may act on the opposite end portion 522 of the belt 520. During slide-in of the second housing 220, with respect to the pulley member 530, a slack-side tension may act on the one end portion 521 of the belt 520, and a tight-side tension may act on the opposite end portion 522 of the belt 520.

According to an embodiment, the one end portion 521 of the belt 520 may be disposed substantially flat with the protective film 820. The one end portion 521 of the belt 520 may be disposed substantially flat with the protective film 820 in a direction parallel to the first direction 261 and the second direction 262. Because the one end portion 521 of the belt 520 is disposed substantially flat with the protective film 820, sliding movement of the second housing 220 with respect to the first housing 210 may be smooth and seamless.

According to an embodiment, with respect to the pulley member 530, the one end portion 521 of the belt 520 may pull one end of the flexible display 230 (e.g., the protective film 820) in the first direction 261 (or a slide-in direction) through the connecting member 710. With respect to the pulley member 530, the opposite end portion 522 of the belt 520 may pull an opposite end of the flexible display 230 in the first direction 261.

According to an embodiment, stress acting on the belt 520 may include stress due to tension (tensile stress) or stress due to bending (bending stress). The tensile stress may be proportional to a tensile force acting on the belt 520 and may be inversely proportional to a cross-sectional area of the belt 520, for example. The bending stress acting on the belt 520 may be proportional to a longitudinal elastic modulus (a degree of resistance to tension or compression) of the belt 520 and/or a thickness of the belt 520, for example. For example, a position and a diameter of at least one pulley member 530 included in the pulley member 530 may affect bending stress acting on the belt 520. To prevent damage to the belt 520 during sliding movement of the second housing 220 with respect to the first housing 210, a shape or a material of the belt 520 may be selected in consideration of tensile stress or bending stress. As an example, the belt 520 may include stainless steel and may be implemented in the form of a thin strip. The belt 520 may be implemented of various other metal materials or non-metal materials.

According to an embodiment, in the first state of the electronic device 500, when a rear surface of the electronic device 500 is viewed from above (e.g., in the -z-axis direction), the one end portion 521 of the belt 520 and/or the connecting member 710 may not overlap the battery 319. In the second state of the electronic device 500, when a rear surface of the electronic device 500 is viewed from above, the one end portion 521 of the belt 520 and/or the connecting member 710 may overlap the battery 319.

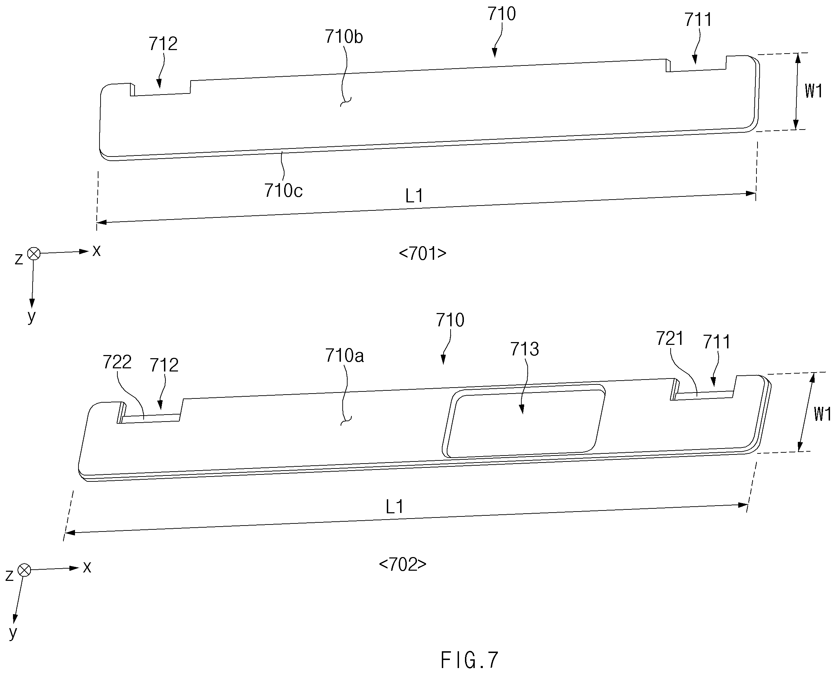

FIG. 7 is a perspective view illustrating a connecting member included in an electronic device according to an embodiment. In FIG. 7, <701> is a one-side view of a connecting member according to an embodiment viewed from one direction (e.g., the z-axis direction), and <702> is an opposite-side view of the connecting member according to an embodiment viewed from another direction opposite to the one direction (e.g., the -z-axis direction).

Referring to FIG. 7, the connecting member 710 may have a designated first width W1 and a first length L1 that is greater than the first width W1. The first length L1 may be less than or equal to at least any one of a plurality of bars included in a support member (e.g., the support member 331 of FIG. 3A, FIG. 3B, FIG. 4A, FIG. 4B, FIG. 5A, FIG. 5B, FIG. 6A, and FIG. 6B).

The connecting member 710 may include a first surface 710a, a second surface 710b that faces a direction opposite to the first surface 710a, and a plurality of side surfaces 710c formed between the first surface 710a and the second surface 710b.

The connecting member 710 may include at least one opening 711 and 712 that is formed at a portion of a side surface that faces the -y axis, among a plurality of side surfaces 710c. The at least one opening 711 and 712 may be formed such that a portion of a side surface that faces the -y axis, among the plurality of side surfaces 710c, is opened in the -y-axis direction. The at least one opening 711 and 712 may be formed to be opened toward one end of a display panel (e.g., the display panel 610 of FIG. 5A, FIG. 5B, FIG. 6A, and FIG. 6B). The at least one opening 711 and 712 may include a first opening 711 and a second opening 712 that are spaced apart from each other in the x-axis direction (or a lengthwise direction of the connecting member 710).

The connecting member 710 may include at least one stepped portion 721 and 722 for fastening to the support member. The at least one stepped portion 721 and 722 may include a first stepped portion 721 and a second stepped portion 722 that have a height lower than the first surface 710a. The first stepped portion 721 may be formed to correspond to the first opening 711. The first stepped portion 721 may be formed between the first surface 710a and the first opening 711. The second stepped portion 722 may be formed to correspond to the second opening 712. The second stepped portion 722 may be formed between the first surface 710a and the second opening 712.

The connecting member 710 may include a groove-shaped seating portion 713 that is recessed from the first surface 710a in a direction toward the second surface 710b (e.g., the -z-axis direction). The seating portion 713 may be a region in which a one end portion (e.g., the one end portion 521 of the belt 520 of FIG. 3A, FIG. 3B, FIG. 4A, FIG. 4B, FIG. 5A, FIG. 5B, FIG. 6A, and FIG. 6B) of the belt is seated. The seating portion 713 may be disposed between the first opening 711 and the second opening 712.

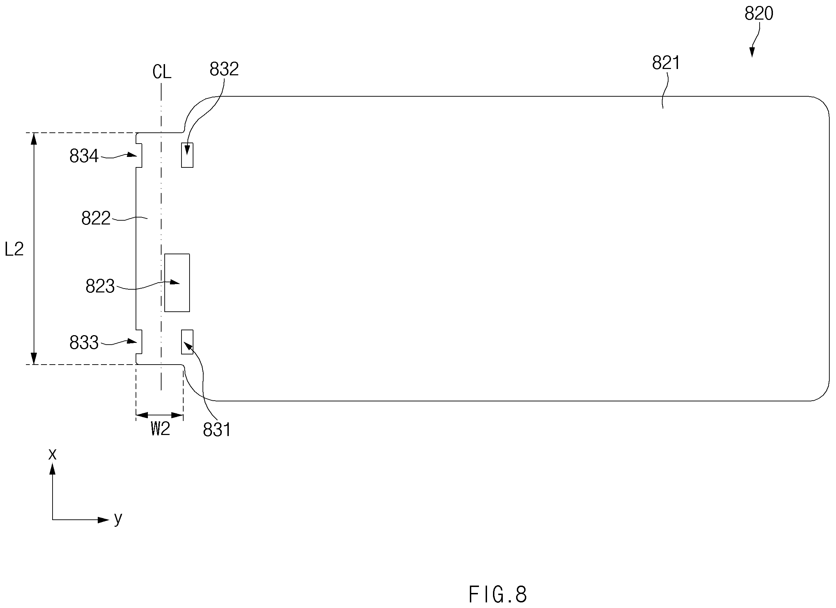

FIG. 8 is a perspective view illustrating a protective film included in an electronic device according to an embodiment. FIG. 8 is a view illustrating a protective film in a state before being coupled to a connecting member (or in a state before a hemming process).

Referring to FIG. 8, the protective film 820 may include a first protective region 821 and a second protective region 822 that extends from the first protective region 821. The first protective region 821 may have an area corresponding to a display panel (e.g., the display panel 610 of FIG. 3A, FIG. 3B, FIG. 4A, FIG. 4B, FIG. 5A, FIG. 5B, FIG. 6A, and FIG. 6B). The first protective region 821 may overlap at least a portion of the display panel 610. As an example, the first protective region 821 may completely overlap the display panel 610.

The second protective region 822 may be formed to have a smaller area than the first protective region 821. As an example, the second protective region 822 may have a second length L2 smaller than the first protective region 821 and a second width W2 smaller than the first protective region 821.

The second protective region 822 may be formed to have a surface area that may surround at least a portion of a connecting member (e.g., the connecting member 710 of FIG. 7). The second protective region 822 may be formed to have a surface area that may surround at least any one of a first surface (e.g., the first surface 710a of FIG. 7) and a second surface (e.g., the second surface 710b of FIG. 7) of the connecting member. As an example, the second protective region 822 may have a surface area that is at least two times or more greater than that of the connecting member. As an example, the second protective region 822 may have a second width W2 that is two times or more greater than a first width (e.g., the first width W1 of FIG. 7) of the connecting member and a second length L2 that is the same as or similar to a first length (e.g., the first length L1 of FIG. 7) of the connecting member.

The second protective region 822 may include at least any one of a plurality of holes 823, 831, and 832 and a plurality of openings 833 and 834.

According to an embodiment, the second protective region 822 may include a seating hole 823 corresponding to a seating portion (e.g., the seating portion 713 of the connecting member 710 of FIG. 7) of the connecting member.

According to an embodiment, the second protective region 822 may include at least one fastening hole 831 and 832 spaced apart from each other with the seating hole 823 interposed therebetween. The at least one fastening hole 831 and 832 may include a first fastening hole 831 and a second fastening hole 832 that are spaced apart from each other with the seating hole 823 interposed therebetween. As an example, a spacing distance between the first fastening hole 831 and the seating hole 823 may be different from a spacing distance between the second fastening hole 832 and the seating hole 823. The spacing distance between the first fastening hole 831 and the seating hole 823 may be shorter than the spacing distance between the second fastening hole 832 and the seating hole 823. As an example, the spacing distance between the first fastening hole 831 and the seating hole 823 may be the same as the spacing distance between the second fastening hole 832 and the seating hole 823.

According to an embodiment, the second protective region 822 may include a first fastening opening 833 aligned with the first fastening hole 831 and a second fastening opening 834 aligned with the second fastening hole 832.

The first fastening opening 833 and the second fastening opening 834 may be formed by opening a portion of the second protective region 822 of the protective film 820. The first fastening opening 833 and the second fastening opening 834 may be formed to be opened in a direction opposite to a first opening (e.g., the first opening 711 of FIG. 7) and a second opening (e.g., the second opening 712 of FIG. 7) of the connecting member.

The first fastening opening 833 and/or the second fastening opening 834 may be located on one side with respect to an imaginary center line CL parallel to the x-axis direction (or a direction perpendicular to a depth direction of the seating hole 823 and a lengthwise direction of the second protective region 822), and the first fastening hole 831 and/or the second fastening hole 832 may be located on an opposite side with respect to the imaginary center line CL. As an example, the first fastening opening 833 may be located symmetrical to the first fastening hole 831 with respect to the imaginary center line CL. The second fastening opening 834 may be located symmetrical to the second fastening hole 832 with respect to the imaginary center line CL. As an example, a center of the first fastening opening 833 may be located at the same distance from the imaginary center line CL as a center of the first fastening hole 831. A center of the second fastening opening 834 may be located at the same distance from a center of the second fastening hole 832 with respect to an imaginary center line CL parallel to a lengthwise direction of the second protective region 822.

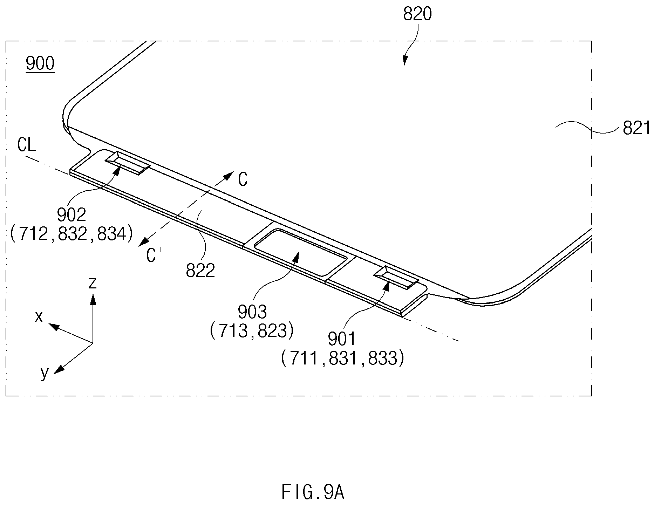

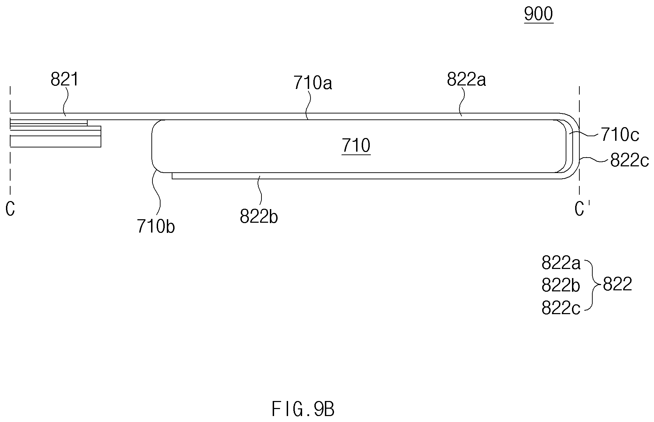

FIG. 9A is a view illustrating an electronic device including a protective film coupled to a connecting member according to an embodiment, and FIG. 9B is a view illustrating the electronic device taken along line C-C' in FIG. 9A. The electronic device 900 of FIG. 9A and FIG. 9B is identical to any one of the previous embodiments of FIG. 1 to FIG. 8, or for components that are the same as those of the previous embodiments or may be easily understood through the previous embodiments, the same reference numerals are assigned or omitted, and detailed descriptions thereof will also be omitted.

Referring to FIG. 9A and FIG. 9B, a partial region of the protective film 820 may be bent. The second protective region 822 of the protective film 820 may be bent by a hemming process. The second protective region 822 of the protective film 820 may be hemmed to be folded under the protective film 820, so that at least a portion of the second protective region 822 may be rounded. The second protective region 822 of the protective film 820 may be bent to surround at least a portion of the connecting member 710.

The second protective region 822 may include a first portion 822a disposed on the first surface 710a of the connecting member 710, a second portion 822b disposed on the second surface 710b of the connecting member 710, and a third portion 822c disposed on a side surface 710c of the connecting member 710. The first portion 822a may extend from the first protective region 821 and may be formed to surround the first surface 710a of the connecting member 710. The second portion 822b may be disposed to face the first portion 822a with the connecting member 710 interposed therebetween and may be formed to surround the second surface 710b of the connecting member 710. The third portion 822c may be disposed between the first portion 822a and the second portion 822b to connect the first portion 822a and the second portion 822b. The third portion 822c may be formed to surround the side surface 710c of the connecting member 710.

At least some of the first portion 822a, the second portion 822b, and the third portion 822c of the second protective region 822 may be closely attached to the connecting member 710. As an example, an adhesive member (not illustrated) may be disposed between the second protective region 822 and the connecting member 710.

As an example, among the first portion 822a, the second portion 822b, and the third portion 822c, the first portion 822a and the second portion 822b may be disposed to be closely attached to the connecting member 710. At least a portion of the third portion 822c may be formed to be rounded (or curved) while being spaced apart from the side surface 710c of the connecting member 710. As an example, the first portion 822a, the second portion 822b, and the third portion 822c may be disposed to be closely attached to the connecting member 710. At least a portion of the third portion 822c may be formed along a shape of the side surface of the connecting member 710 while being closely attached to the side surface 710c of the connecting member 710.

According to an embodiment, the protective film 820 may be bent, in a state in which the first opening 711 of the connecting member 710 and the first fastening hole 831 are aligned, the second opening 712 of the connecting member 710 and the second fastening hole 832 are aligned, and the seating portion 713 of the connecting member 710 and the seating hole 823 are aligned. The second protective region 822 of the protective film 820 may be bent such that the first fastening hole 831, the first opening 711, and the first fastening opening 833 overlap each other, and the second fastening hole 832, the second opening 712, and the second fastening opening 834 overlap each other. The first fastening opening 833 may overlap the first opening 711 and the first fastening hole 831 when the second protective region 822 is bent with respect to an imaginary center line CL parallel to the x-axis direction (or a direction perpendicular to a depth direction of the seating hole 823 and a lengthwise direction of the second protective region 822). The second fastening opening 834 may overlap the second opening 712 and the second fastening hole 832 when the second protective region 822 is bent with respect to an imaginary center line CL parallel to a lengthwise direction of the second protective region 822.

A hole-shaped first fastening space 901 may be formed because the first fastening hole 831, the first opening 711, and the first fastening opening 833 overlap each other. A hole-shaped second fastening space 902 may be formed because the second fastening hole 832, the second opening 712, and the second fastening opening 834 overlap each other. A groove-shaped seating space 903 may be formed in the coupled protective film 820 and connecting member 710 because the seating portion 713 and the seating hole 823 overlap each other.

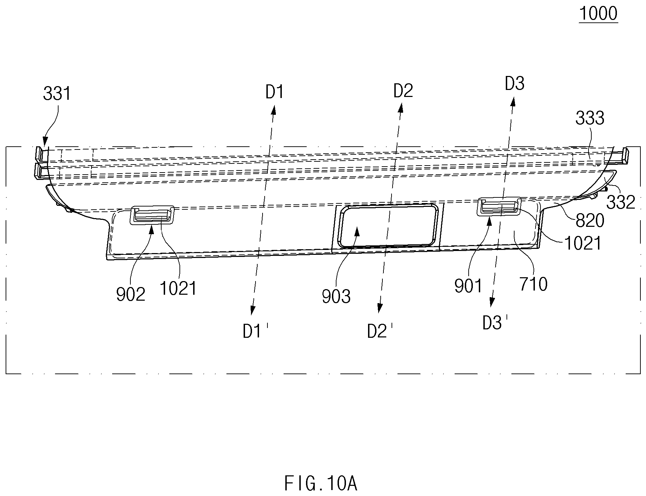

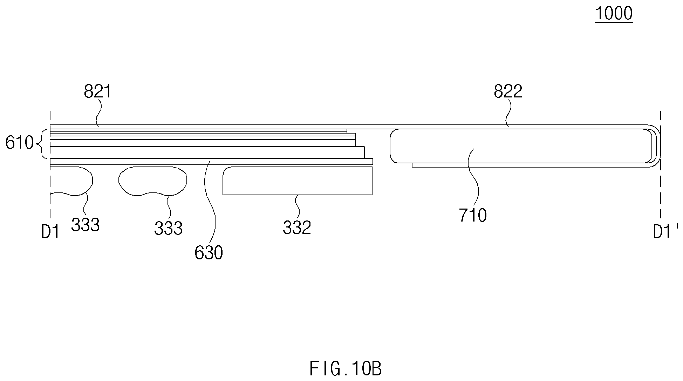

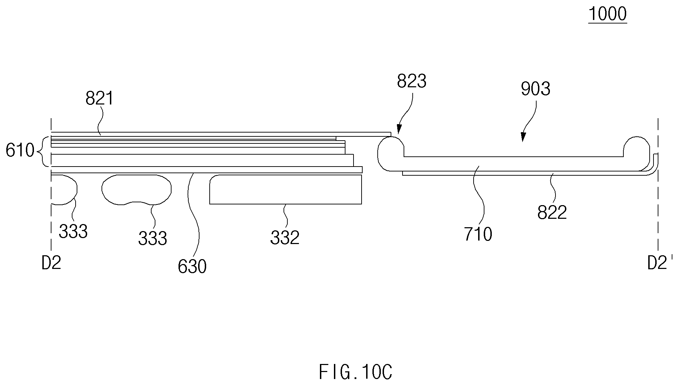

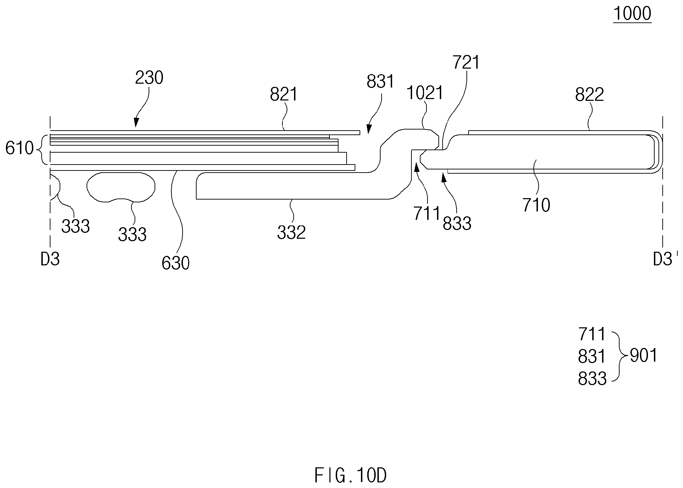

FIG. 10A is a perspective view for describing a fastening relationship between a support member and a connecting member according to an embodiment, FIG. 10B is a cross-sectional view taken along line D1-D1' in FIG. 10A, FIG. 10C is a cross-sectional view taken along line D2-D2' in FIG. 10A, and FIG. 10D is a cross-sectional view taken along line D3-D3' in FIG. 10A. The electronic device 1000 of FIG. 10A, FIG. 10B, FIG. 10C, and FIG. 10D is identical to any one of the previous embodiments of FIG. 1 to FIG. 9B, or for components that are the same as those of the previous embodiments or may be easily understood through the previous embodiments, the same reference numerals are assigned or omitted, and detailed descriptions thereof will also be omitted.

Referring to FIG. 10A to FIG. 10D, the support member 331 may be disposed to face the support sheet 630 of the flexible display 230. The support member 331 may include a plurality of bars 333 that are segmented from each other. At least a portion of an end bar 332 located on an outermost side among the plurality of bars 333 may be formed in a substantially plate shape (e.g., a rectangular plate shape) and may have designated rigidity. Because the end bar 332 supports one end of the flexible display 230, the end bar 332 may be formed to have higher rigidity than the other bars 333 included in the support member 331. As an example, the end bar 332 may be formed to have a greater width than the other bars 333. The end bar 332 may be disposed adjacent to the connecting member 710.

The support member 331 may include a protrusion 1021 that is fastened to the stepped portion 721 of the connecting member 710. The stepped portion 721 may be formed to be stepped toward the end bar 332 and/or the flexible display 230, and the protrusion 1021 may protrude toward the connecting member 710 from one end of the end bar 332. The protrusion 1021 may be engaged with the stepped portion 721, so that tilt of the connecting member 710 and/or the protective film 820 attached to the connecting member 710 may be prevented or reduced. Movement of the connecting member 710 and/or the protective film 820 in a direction perpendicular to a sliding direction (or a lengthwise direction of the end bar) may be restricted. Tilt of the protective film 820 attached to the connecting member 710 may be prevented or reduced. As an example, when tension is provided to the flexible display 230 through a belt (e.g., the belt 520 of FIG. 5A, FIG. 5B, FIG. 6A, and FIG. 6B) seated in the seating space 903, tilt of the protective film 820 may be prevented or reduced.

The second protective region 822 of the protective film 820 may be formed to surround at least a portion of the connecting member 710. The second protective region 822 may be formed in a region excluding the first fastening space 901, the second fastening space 902, and the seating space 903.

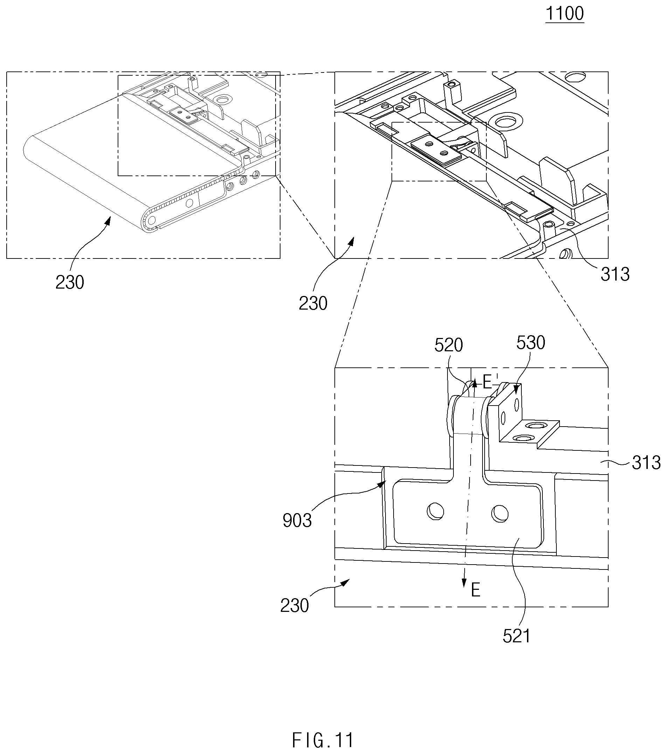

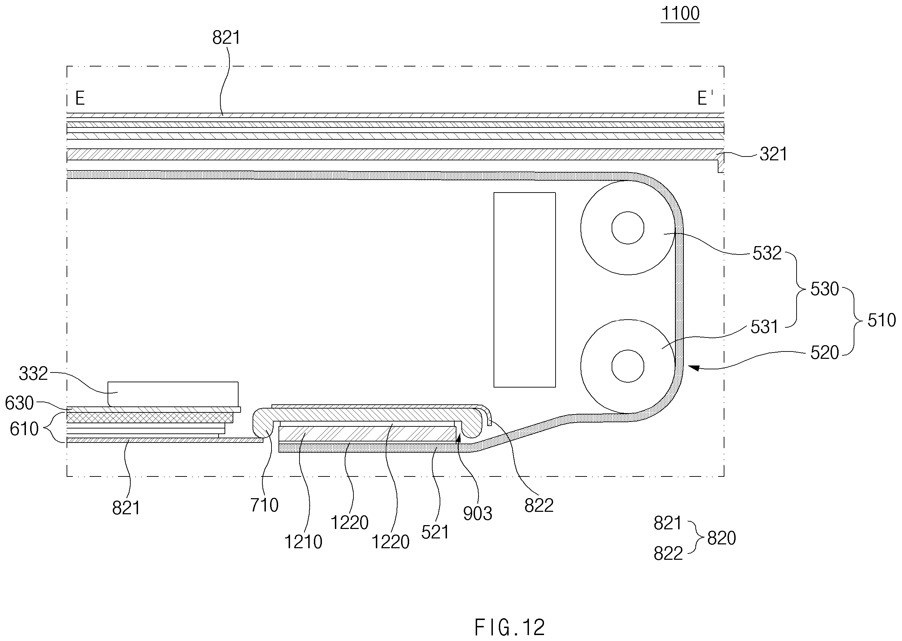

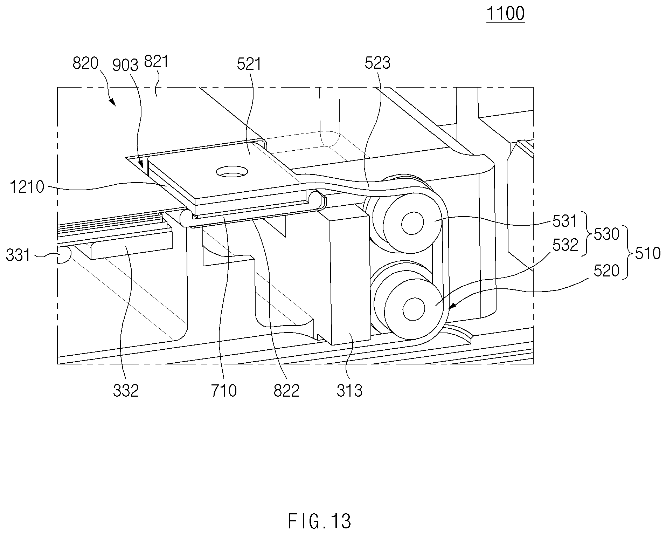

FIG. 11 is a perspective view illustrating a connection relationship between a belt assembly and a connecting member of an electronic device according to an embodiment, FIG. 12 is a cross-sectional view illustrating the electronic device taken along line E-E' in FIG. 11, and FIG. 13 is a view illustrating the belt assembly of the electronic device according to an embodiment in detail. The electronic device 1100 of FIG. 11, FIG. 12, and FIG. 13 is identical to any one of the previous embodiments of FIG. 1 to FIG. 10D, or for components that are the same as those of the previous embodiments or may be easily understood through the previous embodiments, the same reference numerals are assigned or omitted, and detailed descriptions thereof will also be omitted.

Referring to FIG. 11, FIG. 12, and FIG. 13, the electronic device 1100 may include a flexible display 230, a connecting member 710, and a belt assembly 510.

According to an embodiment, the belt assembly 510 may include a belt 520 and a pulley member 530 corresponding to the belt 520.

The pulley member 530 may be fixed to the frame 313 of a first housing (e.g., the first housing 210 of FIG. 3A and FIG. 3B) in correspondence to the belt 520. The pulley member 530 may be operatively connected to the belt 520 and may guide movement of the belt 520 and a movement direction of the belt 520 during sliding of the second housing 220 with respect to the first housing. One or a plurality of pulley members 530 may be provided and may be fixed to the frame 313. As an example, the pulley member 530 may include a first pulley member 531 and a second pulley member 532. The first pulley member 531 may be disposed closer to the one end portion 521 of the belt 520 than the second pulley member 532.

The belt 520 may be disposed between the housings 210 and 220 and the connecting member 710. The belt 520 may be connected to the pulley member 530 and then seated in the seating space 903, so that the one end portion 521 of the belt 520 may be fixed to the connecting member 710. The one end portion 521 of the belt 520 may be seated in a seating space 903 provided by coupling of the connecting member 710 and the second protective region 822 of the protective film 820.

According to an embodiment, at least one reinforcing member 1210 may be disposed between the one end portion 521 of the belt 520 and the connecting member 710. An adhesive 1220 may be disposed between the one end portion 521 of the belt 520 and the reinforcing member 1210 and/or between the connecting member 710 and the reinforcing member 1210.

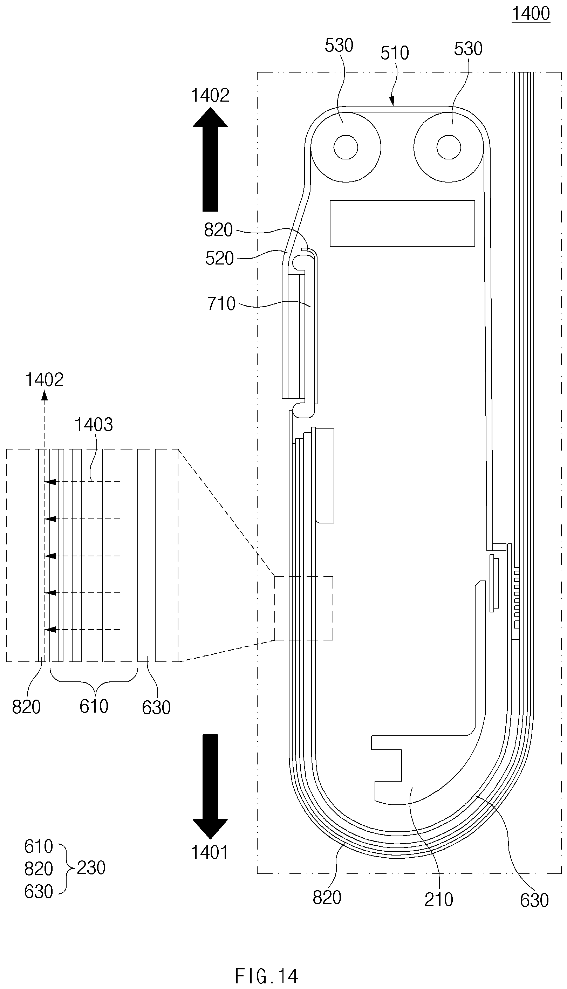

FIG. 14 is a view for describing behavior of an electronic device according to an embodiment in response to an external impact. The electronic device 1400 of FIG. 14 is identical to any one of the previous embodiments of FIG. 1 to FIG. 13, or for components that are the same as those of the previous embodiments or may be easily understood through the previous embodiments, the same reference numerals are assigned or omitted, and detailed descriptions thereof will also be omitted.

Referring to FIG. 14, an electronic device 1400 according to an embodiment may include a flexible display 230, a belt assembly 510 for interworking movement of the flexible display 230, and a connecting member 710 connected to the flexible display 230.

The flexible display 230 may be connected to the belt assembly 510 through the connecting member 710. The protective film 820 disposed on an outermost side of the flexible display 230 may be connected to a belt 520 included in the belt assembly 510 through the connecting member 710.

Because the belt assembly 510 holds the protective film 820, which is an outermost layer of the flexible display 230, through the connecting member 710, defects in the display panel 610 (e.g., a lifting phenomenon, a peeling phenomenon, and a slip phenomenon) may be reduced or prevented even when an external impact (e.g., a drop impact) is applied to the electronic device.

As an example, when the electronic device falls in a drop direction 1401 in which the first housing 210 faces a ground, a minute movement may be generated in the display panel 610 in a direction parallel to the drop direction 1401. The belt 520 may pull the protective film 820 through the connecting member 710 in a direction opposite to the drop direction 1402. Because the belt 520 holds the protective film 820, which is an outermost layer of the flexible display 230, the belt 520 may also pull layers inside the display panel 610, in which peeling is about to occur, in a direction opposite to the drop direction 1402. The belt 520 may provide a restraining force that constrains the display panel 610 in a direction opposite to a direction 1403 in which layers inside the display panel 610, in which peeling is about to occur, tend to be separated. Due to a restraining force provided by the belt 520, slip between layers inside the display panel 610 may be minimized and/or prevented, so that defects of the flexible display 230 may be minimized and/or prevented.

As a comparative example, when a belt is connected to a support sheet that is an innermost layer of the display and holds the support sheet, the belt 520 may not provide a restraining force that constrains the display panel 610 in a direction opposite to a direction 1403 in which layers inside the display panel 610, in which peeling is about to occur, tend to be separated.

Table 1 is a table for describing a maximum value of stress in a comparative example and an embodiment. When any one of corners of the electronic device 1400 contacts a ground during falling, it may be understood that stress of the electronic device 1400 according to the embodiment due to a drop impact is reduced by about 8% compared to the comparative example, as shown in Table 1. According to an embodiment, due to a reduction in stress, defects of the flexible display that may occur during a drop impact of the electronic device may be minimized and/or prevented.

**[Table 1]**

| | Comparative Example | Embodiment |
|---|---|---|
| Maximum stress value | 225 MPa | 207 MPa |

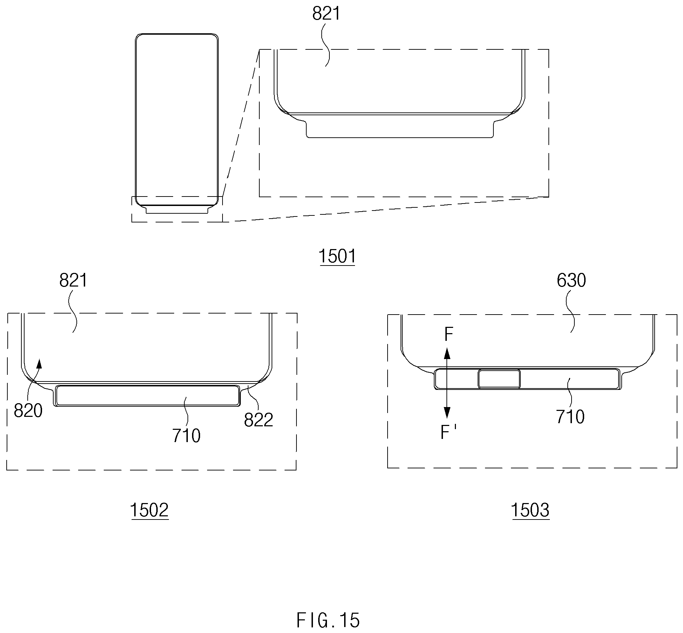

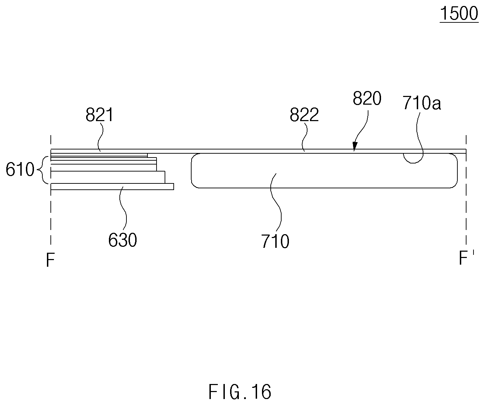

FIG. 15 illustrates views illustrating a protective film and a connecting member of an electronic device according to an embodiment, and FIG. 16 is a view taken along line F-F' in FIG. 15. In FIG. 15, <1501> is a view illustrating a state before a connecting member is attached to a protective film, <1502> is a view illustrating a rear surface of a display in which the connecting member is attached to the protective film, and <1503> is a view illustrating a front surface of a display in which the connecting member is attached to the protective film.

The electronic device 1500 of FIG. 15 and FIG. 16 is identical to any one of the previous embodiments of FIG. 1 to FIG. 14, or for components that are the same as those of the previous embodiments or may be easily understood through the previous embodiments, the same reference numerals are assigned or omitted, and detailed descriptions thereof will also be omitted.

Referring to FIG. 15 and FIG. 16, the protective film 820 may include a first protective region 821 and a second protective region 822 that extends from the first protective region 821. The first protective region 821 may overlap the display panel 610 and the support sheet 630 when the protective film 820 is viewed from above. The second protective region 822 may not overlap the display panel 610 and the support sheet 630 when the protective film 820 is viewed from above.

Because a connecting member 710 is attached to at least one surface of the second protective region 822 of the protective film 820, the protective film 820 may be connected to a belt assembly (e.g., the belt assembly 510 of FIG. 5A, FIG. 5B, FIG. 6A, and FIG. 6B) through the connecting member 710. The connecting member 710 may be attached to one surface of the second protective region 822 of the protective film 820. As an example, the first surface 710a of the connecting member 710 may be attached to the second protective region 822 of the protective film 820 in a direction parallel to a thickness direction of the display panel 610.

The protective film 820, which is an outermost layer of the display, may be connected to a belt assembly through the connecting member 710, so that a risk of defects occurring in the display panel 610 due to an external impact may be reduced or prevented.

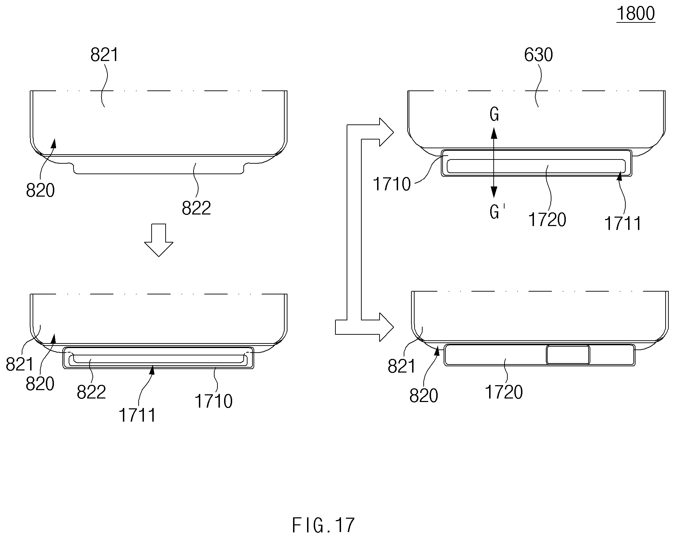

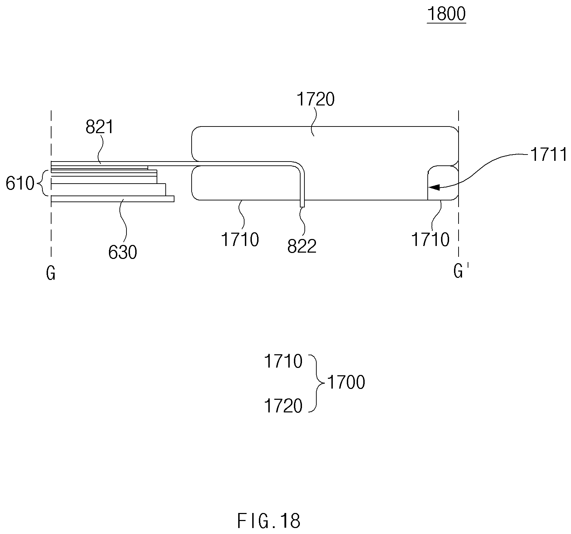

FIG. 17 illustrates views illustrating a coupling process of a protective film and a plurality of connecting members of an electronic device according to an embodiment, and FIG. 18 is a cross-sectional view taken along line G-G' in FIG. 17. The electronic device 1800 of FIG. 17 and FIG. 18 is identical to any one of the previous embodiments of FIG. 1 to FIG. 14, or for components that are the same as those of the previous embodiments or may be easily understood through the previous embodiments, the same reference numerals are assigned or omitted, and detailed descriptions thereof will also be omitted.

Referring to FIG. 17 and FIG. 18, the electronic device 1800 may include a protective film 820 and a connecting member 1700.

The protective film 820 may include a first protective region 821 and a second protective region 822 that extends from the first protective region 821. The first protective region 821 of the protective film 820 may be disposed on the display panel 610, and the display panel 610 may be disposed on the support sheet 630.

The connecting member 1700 may include a plurality of connecting members 1710 and 1720. As an example, the connecting member 1700 may include a first connecting member 1710 and a second connecting member 1720. The first connecting member 1710 may be fixed on the second protective region 822 of the protective film 820. The first connecting member 1710 may include a through-hole 1711 exposing the second protective region 822. The first connecting member 1710 may be formed in a ring shape that surrounds the through-hole 1711. The first connecting member 1710 may be disposed on the protective film 820 to expose one end of the second protective region 822 through the through-hole 1711. The second connecting member 1720 may be fixed on the first connecting member 1710. The second connecting member 1720 may be assembled on the first connecting member 1710 such that the second protective region 822 of the protective film 820 is disposed between the first connecting member 1710 and the second connecting member 1720.

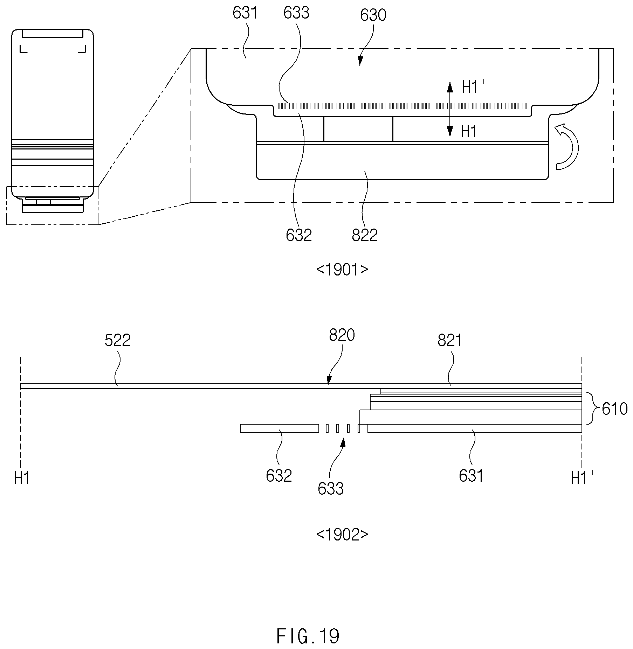

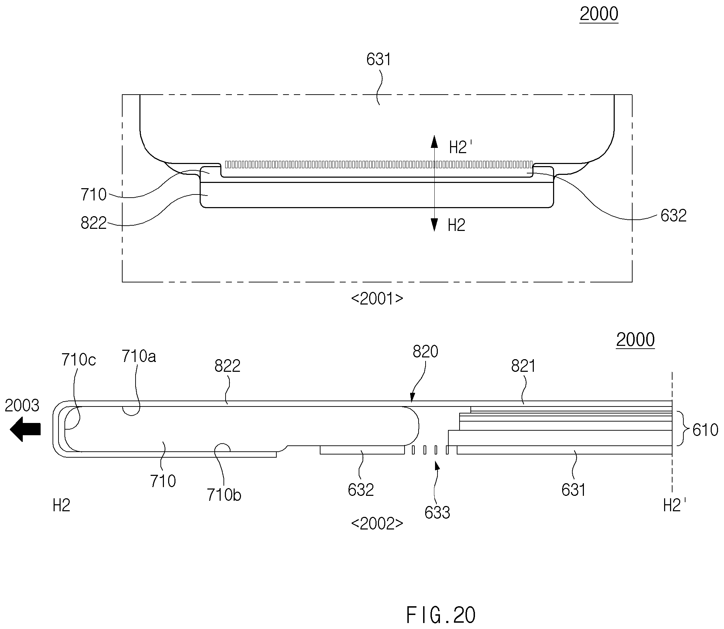

FIG. 19 illustrates views illustrating a state before coupling between a flexible display and a connecting member of an electronic device according to an embodiment, and FIG. 20 illustrates views illustrating a state in which the flexible display and the connecting member are coupled according to an embodiment. In FIG. 19, <1901> is a plan view illustrating a flexible display before a connecting member is attached, and <1902> is a cross-sectional view taken along line H1-H1' in <1901>, and in FIG. 20, <2001> is a plan view illustrating a flexible display to which a connecting member is attached, and <2002> is a cross-sectional view taken along line H2-H2' in <2001>. The electronic device 2000 of FIG. 19 and FIG. 20 is identical to any one of the previous embodiments of FIG. 1 to FIG. 18, or for components that are the same as those of the previous embodiments or may be easily understood through the previous embodiments, the same reference numerals are assigned or omitted, and detailed descriptions thereof will also be omitted.

Referring to FIG. 19, a protective film 820 may be disposed on the display panel 610, and a support sheet 630 may be disposed under the display panel 610. The protective film 820 may be located on an outside of the display panel 610. The support sheet 630 may be located on an inside of the display panel 610.

The protective film 820 may include a first protective region 821 and a second protective region 822 that extends from the first protective region 821. The first protective region 821 may overlap the display panel 610, and the second protective region 822 may extend to a region other than the display panel 610.

The support sheet 630 may include a base region 631 and an extension region 632 that extends from the base region 631. The extension direction of the extension region 632 of the support sheet 630 may be substantially the same as an extension direction of the second protective region 822 of the protective film 820. The extension length of the extension region 632 of the support sheet 630 may be shorter than the extension length of the second protective region 822 of the protective film 820.

A slit region 633 may be disposed between the base region 631 and the extension region 632. The base region 631 may overlap the first protective region 821 of the protective film 820, and the extension region 632 may overlap at least a portion of the second protective region 822.

Referring to FIG. 20, the second protective region 822 of the protective film 820 may be formed to surround a portion of the connecting member 710 through a hemming process. As an example, the second protective region 822 of the protective film 820 may be disposed on a portion of the connecting member 710 and may be fixed to the portion of the connecting member 710. The extension region 632 of the support sheet 630 may be disposed on a remaining portion of the connecting member 710 and may be formed to be fixed to the remaining portion of the connecting member 710. As an example, the second protective region 822 of the protective film 820 may be formed to surround a portion of the first surface 710a, the side surface 710c, and the second surface 710b of the connecting member 710. The extension region 632 of the support sheet 630 may be formed to surround at least a portion of a remaining part of the second surface 710b.

The protective film 820 and the support sheet 630 may be connected to a pulley member (e.g., the pulley member 530 of FIG. 5A, FIG. 5B, FIG. 6A, and FIG. 6B) through the connecting member 710. When a pulley member pulls a belt (e.g., the belt 520 of FIG. 5A, FIG. 5B, FIG. 6A, and FIG. 6B) in one direction 2003 when a state of the electronic device is changed, a force that pulls the belt may be directly transmitted to the protective film 820, which is an outermost layer of the display, through the connecting member 710. A force that pulls the belt by the pulley member may be transmitted to the support sheet 630 through the connecting member 710. A force that pulls the belt by the pulley member may be indirectly transmitted to the support sheet 630 through the connecting member 710 due to the lattice pattern of the support sheet 630.

Through the connecting member 710, the belt may be connected to the protective film 820, which is an outermost layer of the flexible display 230, and the support sheet 630, which is an innermost layer. The belt 520 may pull the protective film 820 and the support sheet 630 through the connecting member 710 in a direction 1402 opposite to the drop direction 1401. Because the belt 520 holds the protective film 820, which is an outermost layer of the flexible display 230, and the support sheet 630, which is an innermost layer, the belt 520 may also pull layers inside the display panel 610, in which peeling is about to occur, in a direction opposite to the drop direction 1402. The belt 520 may provide a restraining force that constrains the display panel 610 in a direction opposite to a direction 1403 in which layers inside the display panel 610, in which peeling is about to occur, tend to be separated. Due to a restraining force provided by the belt 520, slip between layers inside the display panel 610 may be minimized and/or prevented, so that defects of the flexible display 230 may be minimized and/or prevented.

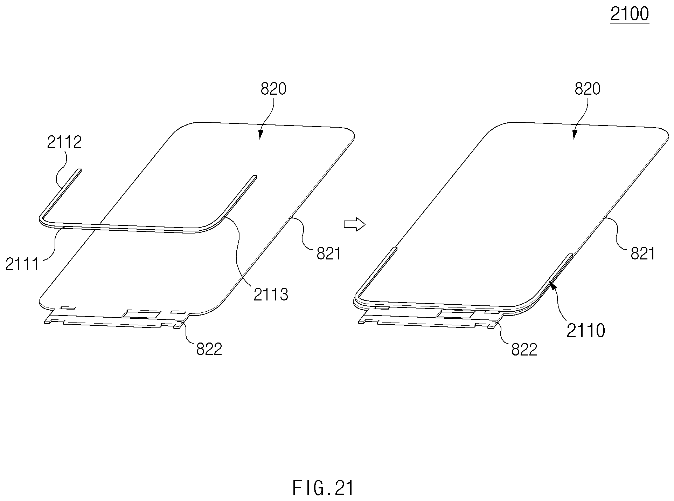

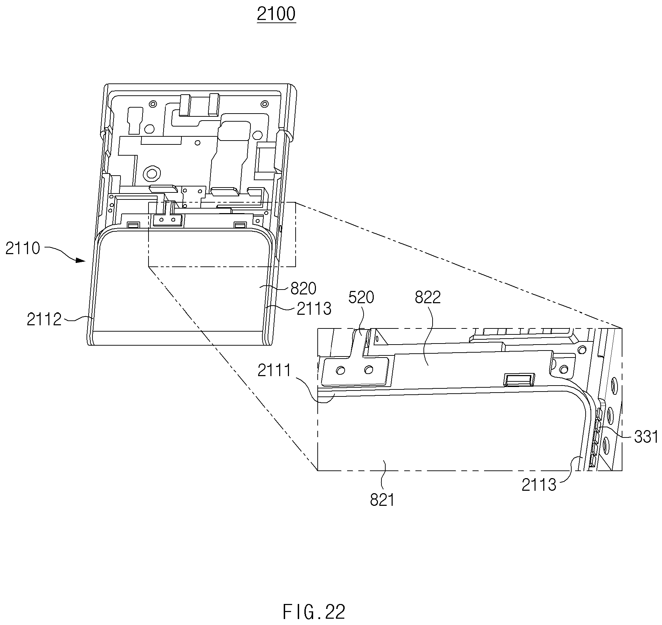

FIG. 21 illustrates views illustrating a rigid member fixed to a protective film of an electronic device according to an embodiment, and FIG. 22 illustrates views illustrating an electronic device including the rigid member according to an embodiment. The electronic device 2100 of FIG. 21 and FIG. 22 is identical to any one of the previous embodiments of FIG. 1 to FIG. 20, or for components that are the same as those of the previous embodiments or may be easily understood through the previous embodiments, the same reference numerals are assigned or omitted, and detailed descriptions thereof will also be omitted.

Referring to FIG. 21 and FIG. 22, a rigid member 2110 may be disposed on an outer side of the protective film 820. Because the rigid member 2110 is disposed on at least a portion of an edge of the first protective region 821 of the protective film 820, rigidity of the protective film 820 may be reinforced. The rigid member 2110 may be formed of a material that is similar to or the same as that of the protective film 820.

The rigid member 2110 may be formed along at least a portion of an edge of the first protective region 821. The rigid member 2110 may overlap at least a portion of an edge of the first protective region 821 of the protective film 820 when the protective film 820 is viewed from above. As an example, the rigid member 2110 may include a first rigid region 2111 disposed between the first protective region 821 and the second protective region 822, a second rigid region 2112 that extends from one side of the first rigid region 2111, and a third rigid region 2113 that extends from an opposite side of the first rigid region 2111.

According to an embodiment, the second rigid region 2112 and the third rigid region 2113 may be formed to correspond to the support member 331. The second rigid region 2112 and the third rigid region 2113 may be formed on the support member 331 and may overlap the support member 331.

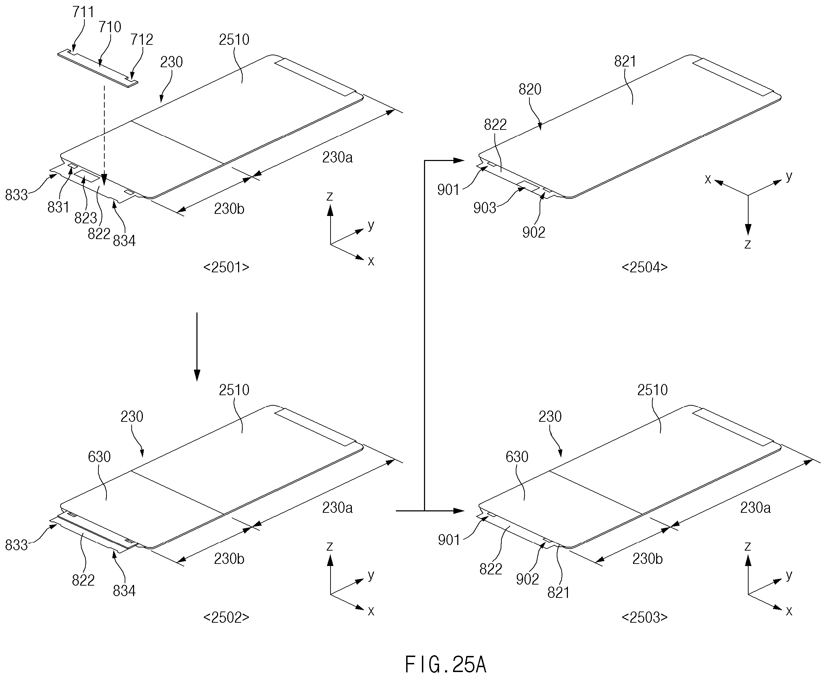

According to an embodiment, the second rigid region 2112 and the third rigid region 2113 may be formed to correspond to not only the support member 331 but also a metal plate of the display that is formed in a region other than the support member (e.g., a metal plate 2510 of FIG. 25A). The second rigid region 2112 and the third rigid region 2113 may be formed on the support member 331 and the metal plate and may overlap the support member 331 and the metal plate.

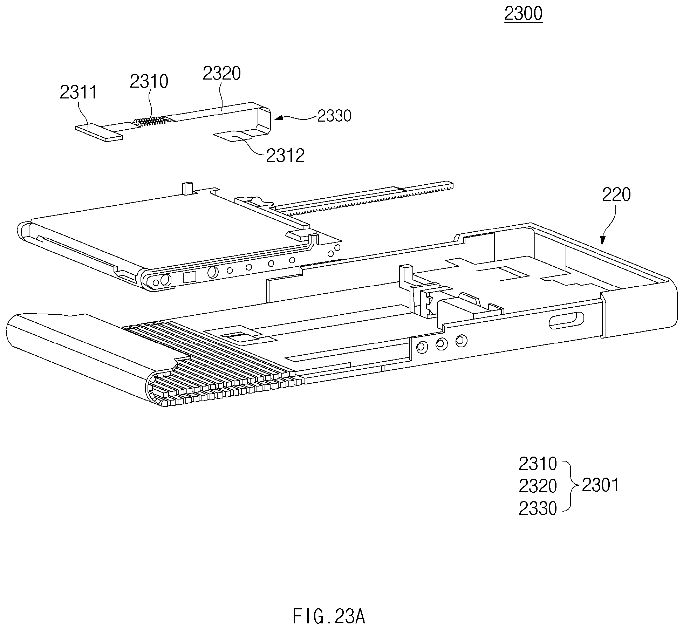

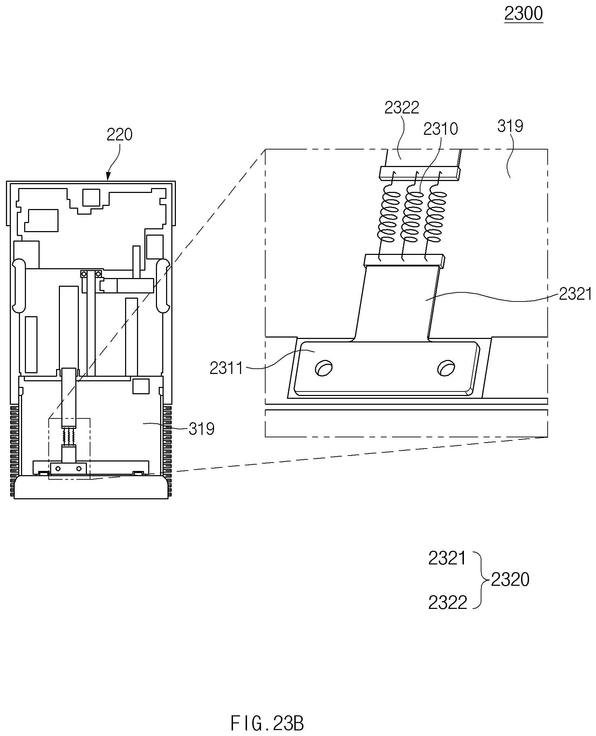

FIGS. 23A and 23B are views illustrating an electronic device according to an embodiment, the electronic device including an elastic member. The electronic device 2300 of FIG. 23A and FIG. 23B is identical to any one of the previous embodiments of FIG. 1 to FIG. 22, or for components that are the same as those of the previous embodiments or may be easily understood through the previous embodiments, the same reference numerals are assigned or omitted, and detailed descriptions thereof will also be omitted.

Referring to FIG. 23A and FIG. 23B, the electronic device 2300 may include a belt assembly 2301 disposed between the second housing 220 and the flexible display 230. The belt assembly 2301 may include a belt 2320, an elastic member 2310 disposed in the belt 2320, and a pulley 2330 (e.g., the pulley member 530 of FIG. 5A, FIG. 5B, FIG. 6A, and FIG. 6B) corresponding to the belt 2320.

The belt 2320 may be disposed between the second housing 220 and the flexible display 230. The one end portion 2311 of the belt 2320 may be fixed to the connecting member 710 attached to the protective film 820. The one end portion 2311 of the belt 2320 may be connected to the protective film 820 that defines an outermost side surface of the flexible display 230 through the connecting member 710. The opposite end portion 2321 of the belt 2320 may be fixed to a second cover 321 of the second housing 220 (e.g., the second cover 321 of FIG. 5A, FIG. 5B, FIG. 6A, and FIG. 6B).

The belt 2320 may be divided into a plurality of parts. The belt 2320 may be divided into a plurality of first sub-belts 2321 and second sub-belts 2322.

The elastic member 2310 may be disposed between the belt 2320 divided into a plurality of parts. The elastic member 2310 may be disposed between the first sub-belt 2321 and the second sub-belt 2322 to connect the first sub-belt 2321 and the second sub-belt 2322. The elastic member 2310 may be stretched or compressed in a lengthwise direction of the belt 2320. The elastic member 2310 may be disposed between the first sub-belt 2321 and the second sub-belt 2322, so that a reduction in tension of the belt 2320 may be reduced.

According to an embodiment, a position, a number, and a shape of the elastic member 2310 are not limited to the embodiment of FIG. 23A and FIG. 23B and may be variously changed.

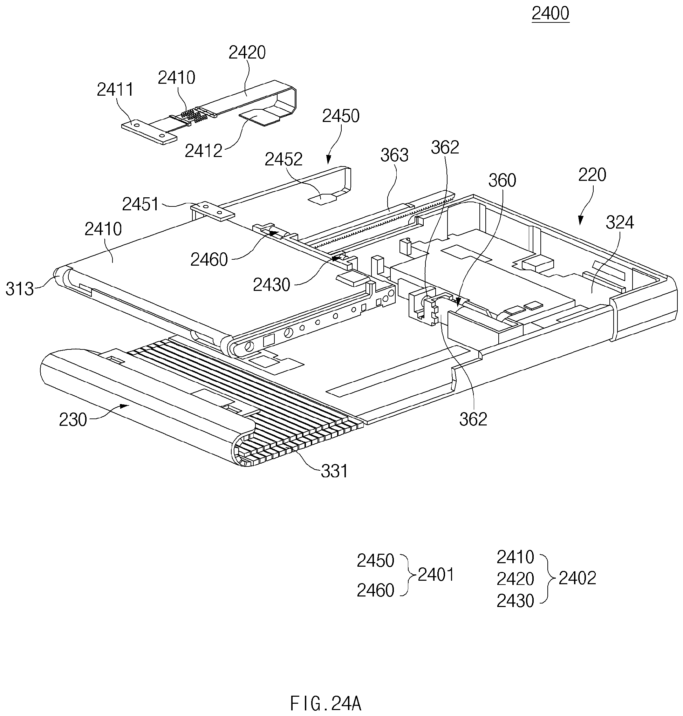

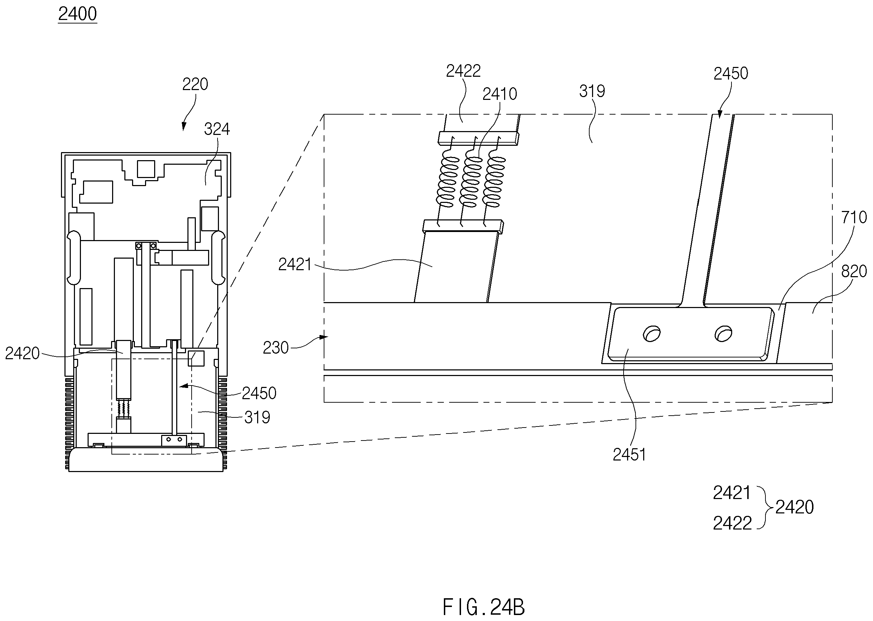

FIGS. 24A and 24B illustrate views illustrating an electronic device including an elastic member according to an embodiment. The electronic device 2400 of FIG. 24A and FIG. 24B is identical to any one of the previous embodiments of FIG. 1 to FIG. 23B, or for components that are the same as those of the previous embodiments or may be easily understood through the previous embodiments, the same reference numerals are assigned or omitted, and detailed descriptions thereof will also be omitted.

Referring to FIG. 24A and FIG. 24B, the electronic device 2400 may include a plurality of belt assemblies 2401 and 2402. The plurality of belt assemblies 2401 and 2402 may include a first belt assembly 2401 (e.g., the belt assembly 510 of FIG. 5A, FIG. 5B, FIG. 6A, and FIG. 6B) and a second belt assembly 2402 that is disposed parallel to the first belt assembly 2401. The first belt assembly 2401 may include a first belt 2450 and a first pulley 2460 (e.g., the pulley member 530 of FIG. 5A, FIG. 5B, FIG. 6A, and FIG. 6B) corresponding to the first belt 2450. The second belt assembly 2402 may include a second belt 2420 connected in parallel to the first belt 2450, an elastic member 2410 disposed in the second belt 2420, and a second pulley 2430 corresponding to the second belt 2420.

The first belt 2450 may be disposed between the second housing 220 and the flexible display 230. One end portion 2451 of the first belt 2450 may be connected to a protective film 820, that defines an outermost layer of the flexible display 230. The one end portion 2451 of the first belt 2450 may be fixed to a connecting member 710 attached to the protective film 820. The one end portion 2451 of the first belt 2450 may be connected to the protective film 820 of the flexible display 230 through the connecting member 710. An opposite end portion 2452 of the first belt 2450 may be fixed to a second cover (e.g., the second cover 321 of FIG. 5A, FIG. 5B, FIG. 6A, and FIG. 6B) of the second housing 220.

The second belt 2420 may be disposed between the second housing 220 and the flexible display 230. One end portion 2411 of the second belt 2420 may be connected to a support sheet (e.g., the support sheet 630 of FIG. 5A, FIG. 5B, FIG. 6A, and FIG. 6B), that defines an innermost layer (or an innermost surface) of the flexible display 230. An opposite end portion 2412 of the second belt 2420 may be fixed to the second cover of the second housing 220.

The second belt 2420 may be divided into a plurality of parts. The second belt 2420 may be divided into a plurality of first sub-belts 2421 and second sub-belts 2422.

The elastic member 2410 may be disposed between the plurality of parts into which the second belt 2420 is divided. The elastic member 2410 may be disposed between the first sub-belt 2421 and the second sub-belt 2422 to connect the first sub-belt 2421 and the second sub-belt 2422. The elastic member 2410 may be stretched or compressed in a lengthwise direction of the belt 2320. The elastic member 2410 may be disposed between the first sub-belt 2421 and the second sub-belt 2422, so that a reduction in tension of the second belt 2420 may be reduced.

According to an embodiment, a position, the number, and a shape of the elastic member 2410 are not limited to the embodiment of FIG. 24A and FIG. 24B and may be variously changed. As an example, the elastic member 2410 may be disposed in the first belt 2450. The first belt 2450 may be divided into a plurality of parts, and the elastic member 2410 may be disposed between the divided first belts 2450 to connect the divided first belts 2450. As an example, the elastic member 2410 may be disposed in the first belt 2450 and the second belt 2420. The first belt 2450 may be divided into a plurality of parts, and the elastic member 2410 may be disposed between the plurality of divided first belts 2450 to connect the plurality of divided first belts 2450. The second belt 2420 may be divided into a plurality of parts, and the elastic member 2410 may be disposed between the plurality of divided second belts 2420 to connect the plurality of divided second belts 2420.

FIGS. 25A to 25G illustrate views illustrating a process of assembling an electronic device according to an embodiment. A process of assembling the electronic device according to an embodiment will be described by taking the embodiment of FIG. 5A, FIG. 5B, FIG. 6A, and FIG. 6B as an example. A process of assembling the electronic device according to an embodiment is not limited to the embodiment of FIG. 5A, FIG. 5B, FIG. 6A, and FIG. 6B, and may also be applied to the embodiments of FIG. 9A to FIG. 24B and may be variously changed.

Referring to FIG. 25A, <2501> is a view illustrating a state before a connecting member is attached to a protective film, <2502> is a view illustrating a state in which a connecting member is attached to a protective film, <2503> is a view illustrating a rear surface of a display panel, on which a hemmed protective film is formed, and <2504> is a view illustrating a front surface of the display panel, on which the hemmed protective film is formed.

According to an embodiment, a protective film 820 including a first protective region 821 and a second protective region 822 may be provided. The first protective region 821 of the protective film 820 may be disposed to correspond to the metal plate 2510 and/or the support sheet 630. The metal plate 2510 may be disposed on a rear surface of the flexible display 230. The metal plate 2510 may be disposed in a first region 230a of the flexible display 230, and the support sheet 630 may be disposed in a second region 230b of the flexible display 230. The second protective region 822 of the protective film 820 may extend from the first protective region 821 so as not to correspond to the metal plate 2510 and/or the support sheet 630. The second protective region 822 of the protective film 820 may include a first fastening opening 833, a second fastening opening 834, a first fastening hole 831, a second fastening hole 832, and a seating hole 823.

A connecting member 710 having a seating portion (e.g., the seating portion 713 of FIG. 7), a first opening 711, and a second opening 712 may be provided. The first opening 711 may be formed at a position corresponding to the first fastening hole 831, and the second opening 712 may be formed at a position corresponding to the second fastening hole 832.

As an example, the connecting member 710 may be attached to a partial region of the second protective region 822 of the protective film 820 so as to be disposed at one end of the display panel.

As an example, the connecting member 710 may be attached to a partial region of the second protective region 822 of the protective film 820 such that the seating portion of the connecting member 710 is aligned with the seating hole 823 of the protective film 820, the first opening 711 of the connecting member 710 is aligned with the first fastening hole 831 of the protective film 820, and the second opening 712 of the connecting member 710 is aligned with the second fastening hole 832 of the protective film 820.

The second protective region 822 of the protective film 820 may be bent toward the support sheet 630 by a hemming process. By bending the protective film 820, the first fastening hole 831, the first opening 711, and the first fastening opening 833 may overlap each other, thereby forming a first fastening space 901 having a hole shape. By bending the protective film 820, the second fastening hole 832, the second opening 712, and the second fastening opening 834 may overlap each other, thereby forming a second fastening space 902 having a hole shape. By bending the protective film 820, the seating portion 713 and the seating hole 823 may overlap each other, thereby forming a groove-shaped seating space 903 in the coupled protective film 820 and connecting member 710.

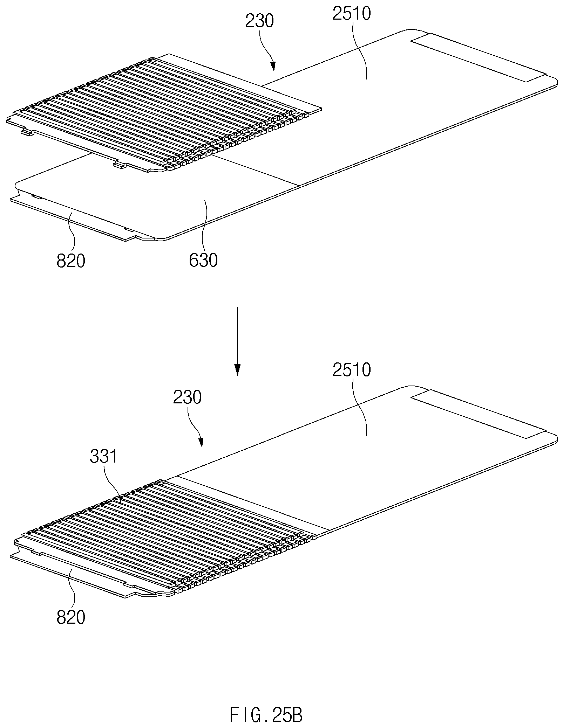

Referring to FIG. 25B, a support member 331 including a plurality of bars may be coupled to the flexible display 230 including the hemmed protective film 820. The support member 331 may be disposed in a region corresponding to the support sheet 630 of the flexible display 230. The support member 331 may be disposed in a region that does not correspond to the metal plate 2510 of the flexible display 230.

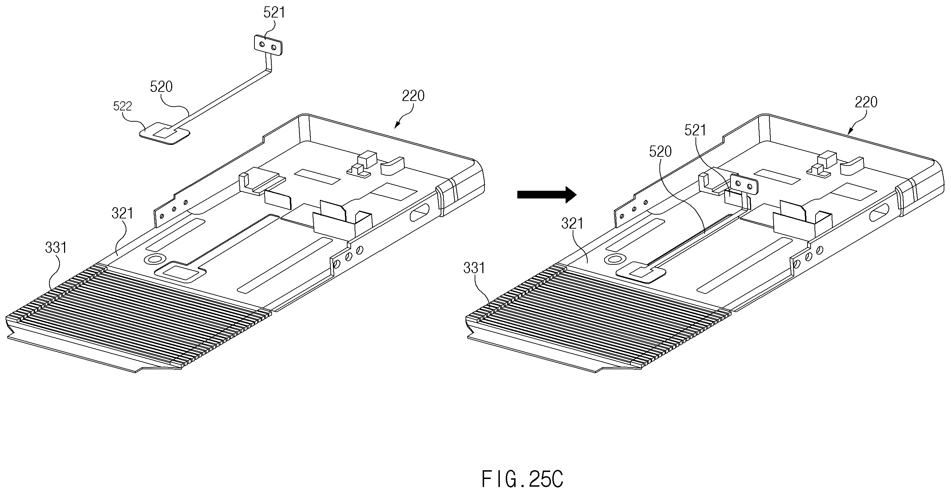

Referring to FIG. 25C, the support member 331 may be assembled to the second housing 220. After the belt 520 is aligned on the second housing 220, the belt 520 may be assembled to the second housing 220. An opposite end portion 522 of the belt 520 may be assembled to the second housing 220. At least a portion of a remaining region of the belt 520, excluding one end portion 521 of the belt 520, may be fixed to the second cover 321 of the second housing 220.

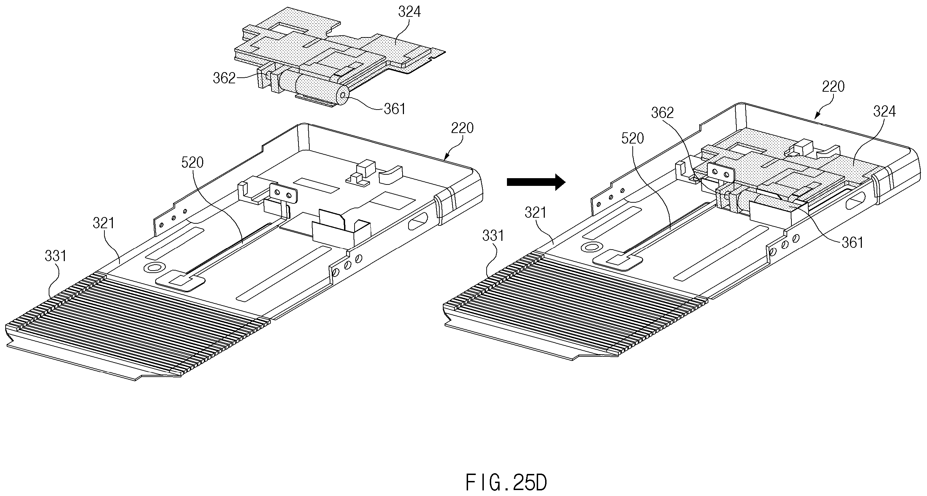

Referring to FIG. 25D, a printed circuit board 324, a pinion gear 362, and a motor 361 may be assembled to the second housing 220. The printed circuit board 324 may be disposed in a portion of a remaining region of the second cover 321 of the second housing 220, excluding a region in which the belt 520 is disposed.

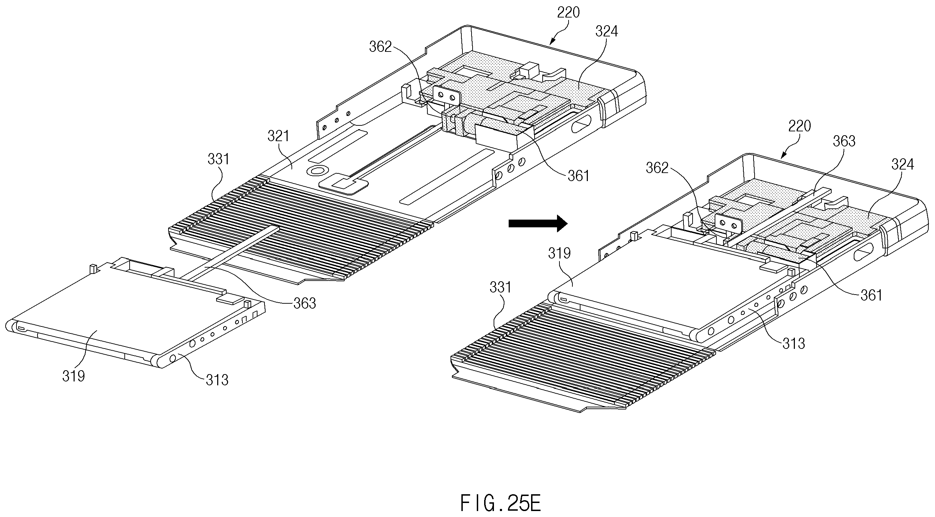

Referring to FIG. 25E, the battery 319 may be seated on the frame 313 of the first housing 210. The frame 313 of the first housing, on which the battery 319 is seated, may be assembled to the second housing 220. The rack gear 363 may be fixed to the second cover 321 of the second housing 220. The rack gear 363 may be disposed to be engaged with the pinion gear 362 fixed to the second housing 220.

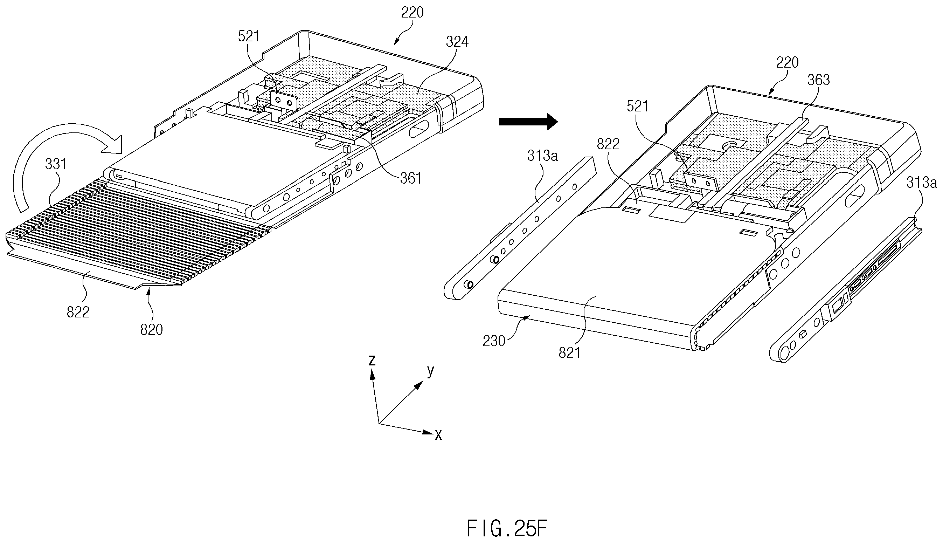

Referring to FIG. 25F, the flexible display 230 may be bent toward the battery 319. By bending the flexible display 230, the first protective region 821 of the protective film 820 may be disposed to face a front surface of the electronic device (e.g., a surface that faces the -z axis), and the second protective region 822 of the protective film 820 may be disposed to face a rear surface of the electronic device (e.g., a surface that faces the +z axis).

Rails 313a for guiding movement of the support member 331 and/or the flexible display 230 may be mounted on the second housing 220. The rails 313a may be mounted on opposite sides of the second housing 220, respectively. As the support member 331 is moved along the rails 313a, the flexible display 230 may be moved along the rails 313a by the support member 331.

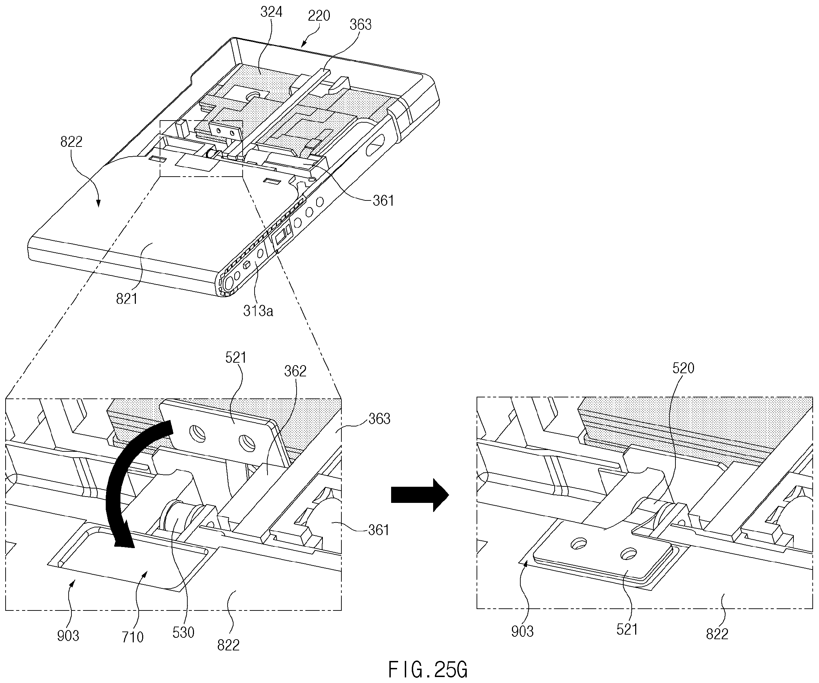

Referring to FIG. 25G, a portion of the belt 520 may be bent toward the connecting member 710, so that the portion of the belt 520 may be assembled to the connecting member 710. As an example, when one end portion 521 of the belt 520 is seated in a groove-shaped seating space 903 formed by overlap of the seating hole of the protective film 820 and the seating portion of the connecting member, the belt 520 may be assembled to the connecting member 710. The belt 520 may be connected to a pulley member 530 that guides movement of the belt 520 and a movement direction of the belt 520.

Meanwhile, the above-described electronic device is not limited to the embodiments described in the drawings, and the electronic devices described in the drawing may be applied in a complex manner. As an example, at least one of the embodiments of FIG. 15 to FIG. 24B may be applied in combination to the embodiment of FIG. 5A, FIG. 5B, FIG. 6A, and FIG. 6B. Furthermore, the position, the number, and the shape of the connecting member 710 described in each drawing are not limited to the above-described example and may be variously changed. Furthermore, the number and the shape of at least one of the sliding drive part and the belt assembly described in each drawing are not limited to the above-described example and may be variously changed.

As described above, according to at least one of various embodiments, an electronic device may include: a housing 210 and 220 defining at least one surface of the electronic device; a flexible display 230, of which a region visible to an outside is varied in response to sliding movement of a portion of the housings 210 and 220, and including a display panel 610 and a protective film 820 disposed on an outside of the display panel 610; a connecting member 710 disposed at one end of the display panel 610, and disposed such that at least a portion thereof is fixed to the protective film 820; and a belt 520 including one end portion 521 fixed to the connecting member 710 and an opposite end portion 522 fixed to an interior of the housing, wherein the protective film 820 extends beyond the display panel 610 to surround at least a portion of the connecting member 710.

According to at least one of various embodiments, an electronic device may include: a first housing 210; a second housing 220 disposed to be movable with respect to the first housing 210; a flexible display 230, of which a region visible to an outside is varied in response to movement of the second housing 220, and including a display panel 610 and a protective film 820 disposed on an outside of the display panel 610; a connecting member disposed at one end of the display panel 610, and disposed such that at least a portion thereof is fixed to the protective film 820; and a belt including one end portion fixed to the connecting member 710 and an opposite end portion fixed to an interior of the housing, wherein the protective film 820 extends beyond the display panel 610 and may be formed such that at least a portion thereof is bent in a region corresponding to the connecting member 710.

According to at least one of various embodiments, an electronic device may include: a housing 210 and 220 defining at least one surface of the electronic device; a flexible display 230, of which a region visible to an outside is varied in response to sliding movement of a portion of the housing 210 and 220, and including a display panel 610 and a protective film 820 disposed on an outside of the display panel 610; a connecting member 710 disposed at one end of the display panel 610, and disposed such that at least a portion thereof is fixed to the protective film 820; and a belt 520 including one end portion 521 fixed to the connecting member 710 and an opposite end portion 522 fixed to an interior of the housing, wherein the protective film 820 may extend beyond the display panel 610 toward the connecting member 710.

According to an embodiment, the protective film 820 may be disposed on an outermost side of the flexible display 230.

According to an embodiment, at least a portion of the protective film 820 may be bent in a region corresponding to the connecting member 710.

According to an embodiment, the protective film 820 may include: a first protective region 821 corresponding to the display panel 610; and a second protective region 822 extending from the first protective region 821 toward the connecting member 710.

According to an embodiment, the second protective region 822 may be formed to surround a first surface 710a of the connecting member 710, a second surface 710b facing an opposite direction to the first surface 710a, and one side surface 710c disposed between the first surface 710a and the second surface 710b.

According to an embodiment, the second protective region 822 may include: a first portion 822a extending from the first protective region 821; a second portion 822b facing the first portion 822a with the connecting member 710 interposed therebetween; and a curved third portion 822c disposed between the first portion 822a and the second portion 822b.

According to an embodiment, the electronic device may further include a support member 331 supporting at least a portion of the flexible display 230 and including a plurality of bars 333.

According to an embodiment, the protective film 820 may include at least one fastening hole 831 and 832 and at least one fastening opening 833 and 834.

According to an embodiment, the connecting member 710 may include: at least one opening 711 and 712 overlapping the at least one fastening hole 831 and 832 and the at least one fastening opening 833 and 834 to define at least one fastening space 901 and 902; and a stepped portion 721 formed to be stepped toward an end bar 332, which is adjacent to the connecting member 710, among the plurality of bars 333 .

According to an embodiment, the end bar 332 may include a protrusion 1021 engaged with the stepped portion 721 via the fastening space 901 and 902.

According to an embodiment, the connecting member 710 may include a groove-shaped seating portion 713.

According to an embodiment, the protective film 820 may include a seating hole 823 overlapping the seating portion 713 to define a seating space 903.

According to an embodiment, the one end portion 521 of the belt 520 may be seated in the seating space 903.

According to an embodiment, the connecting member 1700 may include: a first connecting member 1710 including a through-hole 1711 exposing a portion of the second protective region 822 of the protective film 820; and a second connecting member 1720 coupled to the first connecting member 1710 with the second protective region 822 of the protective film 820 interposed therebetween.

According to an embodiment, the flexible display 230 may further include a support sheet 630 located on an inside of the display panel 610.

According to an embodiment, the support sheet 630 may include a base region 631 and an extension region 632 extending from the base region 631 to be fixed to the connecting member 710.

According to an embodiment, the extension region 632 may extend in the same direction as that of the second protective region 822.

According to an embodiment, an extension length of the extension region 632 may be shorter than an extension length of the second protective region 822.

According to an embodiment, the electronic device may further include a rigid member 2110 disposed along at least a portion of an edge of the first protective region 821.

According to an embodiment, the electronic device may further include a support member 331 supporting at least a portion of the flexible display 230 and including a plurality of bars 333.

According to an embodiment, the rigid member 2110 may be disposed to correspond to the support member 331.

According to an embodiment, the belt 2320 may include at least one elastic member 2310 disposed between the one end portion 2311 and the opposite end portion 2312.

According to an embodiment, the electronic device may further include a second belt 2420 disposed parallel to the belt 520 or 2450.

According to an embodiment, the second belt 2420 may include one end portion 2411 fixed to the support sheet 630 of the flexible display 230, an opposite end portion 2412 fixed to an interior of the housing 220, and at least one elastic member 2410 disposed between the one end portion 2411 and the opposite end portion 2412.

An embodiment of disclosure and terms used herein are not intended to limit the technologies described in the disclosure to specific embodiments, and it should be understood that the embodiments and the terms include modification, equivalent, and/or alternative on the corresponding embodiment described herein. With regard to the description of drawings, similar components may be marked by similar reference marks/numerals. The terms of a singular form may include plural forms unless otherwise specified. In the disclosure, the expressions "A or B", "at least one of A and/or B", "A, B, or C", or "at least one of A, B, and/or C", and the like used herein may include any and all combinations of one or more of the associated listed items. Expressions such as "first," or "second," and the like, may express their components regardless of their priority or importance and may be used to distinguish one component from another component but is not limited to these components. When a certain component (e.g., a first component) is referred to as being "connected" or "coupled" (functionally or communicatively) to another component (e.g., a second component), it should be understood that the certain component may be directly connected to the other component or may be connected to the other component through another component (e.g., a third component).

According to the situation, the expression "adapted to or configured to" used herein may be interchangeably used as, for example, the expression "suitable for", "having the capacity to", "changed to", "made to", "capable of" or "designed to". The expression "a device configured to" may mean that the device is "capable of" operating together with another device or other parts. For example, a "processor configured to (or set to) perform A, B, and C" may mean a dedicated processor (e.g., an embedded processor) for performing corresponding operations or a generic-purpose processor (e.g., a central processing unit (CPU) or an AP) which performs corresponding operations by executing one or more software programs which are stored in a memory device (e.g., the memory).

The term "module" used herein may include a unit, which is implemented with hardware, software, or firmware, and may be interchangeably used with the terms "logic", "logical block", "part", "circuit", or the like. The "module" may be an integrated component, a minimum unit for performing one or more functions, or a part thereof. The "module" may be implemented mechanically or electronically. For example, the module may include a well-known or to-be-developed application-specific integrated circuit (ASIC) chip, field-programmable gate arrays (FPGAs), or programmable logic device that perform any operations.

According to various embodiment, at least part of a device (e.g., modules or functions thereof) or a method (e.g., operations) may be, for example, implemented by instructions stored in a computer-readable storage media (e.g., a memory) in the form of a program module. The instruction, when executed by a processor (e.g., a processor), may cause the processor to perform a function corresponding to the instruction. The computer-readable recording medium may include a hard disk, a floppy disk, a magnetic media (e.g., a magnetic tape), an optical medium (e.g., a compact disc read only memory (CD-ROM) and a digital versatile disc (DVD), a magneto-optical media (e.g., a floptical disk)), an embedded memory, or the like. The one or more instructions may contain a code made by a compiler or a code executable by an interpreter.

Each element (e.g., a module or a program module) according to various embodiments may be composed of single entity or a plurality of entities, a part of the above-described sub-elements may be omitted or may further include other elements. Alternatively or additionally, some components (e.g., a module or a program module) may be combined with each other so as to form one entity, so that the functions of the components may be performed in the same manner as before the combination. According to various embodiments, operations executed by modules, program modules, or other components may be executed by a successive method, a parallel method, a repeated method, or a heuristic method. Alternatively, at least some of the operations may be executed in another order or may be omitted, or any other operation may be added.

## Claims

1. An electronic device, comprising:
a housing (210, 220) forming at least one surface of the electronic device;
a flexible display (230) configured such that an area visible to the outside varies according to a sliding movement of the housing (210, 220), the flexible display comprising a display panel (610) and a protective film (820) disposed outward of the display panel (610);
a connecting member (710, 1700) disposed at one end of the display panel (610) and configured such that at least a portion thereof is fixed to the protective film (820); and
a belt (520, 2320, 2450) comprising one end portion (521) fixed to the connecting member (710, 1700) and the other end portion (522) fixed to the inside of the housing,
wherein the protective film (820) extends beyond the display panel (610) to surround at least a portion of the connecting member (710).

2. The electronic device of claim 1,
wherein the protective film (820) is disposed at an outermost side of the flexible display (230).

3. The electronic device of claim 1,
wherein the protective film (820) is partially bent in a region corresponding to the connecting member (710).

4. The electronic device of claim 1,
wherein the protective film (820) comprises:
a first protective region (821) corresponding to the display panel (610); and
a second protective region (822) extending from the first protective region (821) toward the connecting member (710, 1700).

5. The electronic device of claim 4,
wherein the second protective region (822) is formed to surround a first surface (710a) of the connecting member (710), a second surface (710b) facing a direction opposite to the first surface (710a), and one side surface (710c) disposed between the first surface (710a) and the second surface (710b).

6. The electronic device of claim 4,
wherein the second protective region (822) comprises:
a first portion (822a) extending from the first protective region (821);
a second portion (822b) facing the first portion (822a) with the connecting member (710) interposed therebetween; and
a third portion (822c) having a curved shape and disposed between the first portion (822a) and the second portion (822b).

7. The electronic device of any one of claims 1, 2, 3, or 4,
further comprising a support member (331) supporting at least a portion of the flexible display (230) and comprising a plurality of bars (333),
wherein the protective film (820) comprises at least one fastening hole (831, 832) and at least one fastening opening (833, 834),
wherein the connecting member (710, 1700) comprises: at least one opening (711, 712) overlapping with the at least one fastening hole (831, 832) and the at least one fastening opening (833, 834) to form at least one fastening space (901, 902); and a stepped portion (721) formed to be stepped toward an end bar (332) adjacent to the connecting member (710) among the plurality of bars (333), and
wherein the end bar (332) comprises a protrusion (1021) engaged with the stepped portion (721) via the fastening space (901, 902).

8. The electronic device of any one of claims 1, 2, 3, or 4,
wherein the connecting member (710) comprises a groove-shaped seating portion (713),
wherein the protective film (820) comprises a seating hole (823) overlapping with the seating portion (713) to form a seating space (903), and
wherein the one end portion (521) of the belt (520) is seated in the seating space (903).

9. The electronic device of any one of claims 4, 5, or 6,
wherein the connecting member (1700) comprises:
a first connecting member (1710) comprising a through-hole (1711) exposing a portion of the second protective region (822) of the protective film (820); and
a second connecting member (1720) coupled to the first connecting member (1710) with the second protective region (822) of the protective film (820) interposed therebetween.

10. The electronic device of any one of claims 4, 5, or 6,
wherein the flexible display (230) further comprises a support sheet (630) positioned inward of the display panel (610),
wherein the support sheet (630) comprises a base region (631) and an extension region (632) extending from the base region (631) and fixed to the connecting member (710).

11. The electronic device of claim 10,
wherein the extension region (632) extends in the same direction as the second protective region (822), and
wherein an extension length of the extension region (632) is shorter than an extension length of the second protective region (822).

12. The electronic device of any one of claims 4, 5, or 6,
further comprising a rigid member (2110) disposed along at least a portion of an edge of the first protective region (821).

13. The electronic device of claim 12,
further comprising a support member (331) supporting at least a portion of the flexible display (230) and comprising a plurality of bars (333),
wherein the rigid member (2110) is disposed to correspond to the support member (331).

14. The electronic device of any one of claims 1, 2, 3, or 4,
wherein the belt (2320) comprises at least one elastic member (2310) disposed between the one end portion (2311) and the other end portion (2312).

15. The electronic device of any one of claims 1, 2, 3, or 4,
further comprising a second belt (2420) disposed in parallel with the belt (520, 2450),
wherein the second belt (2420) comprises one end portion (2411) fixed to the support sheet (630) of the flexible display (230), the other end portion (2412) fixed to the inside of the housing (220), and at least one elastic member (2410) disposed between the one end portion (2411) and the other end portion (2412).
